# EUROPEAN PATENT APPLICATION

(11) **EP 4 625 012 A1**
(43) Date of publication of application: **01.10.2025**
(21) Application number: 23894434.2
(22) Date of filing: 09.11.2023
(51) Int. Cl.: G02B 6/36, G02B 6/26

(54) **OPTICAL FIBER HOLDING COMPONENT, OPTICAL FIBER COUPLING STRUCTURE, OPTICAL CONNECTOR, AND OPTICAL COUPLING STRUCTURE**

(30) Priority: 24.11.2022 JP 2022187491
(71) Applicant: SUMITOMO ELECTRIC INDUSTRIES, LTD., Osaka-shi, Osaka 541-0041 (JP)
(72) Inventor: HAJI Kohei, Osaka-shi, Osaka 541-0041 (JP); MORISHIMA Tetsu, Osaka-shi, Osaka 541-0041 (JP)
(74) Representative: TBK
(86) International application number: PCT/JP2023/040419
(87) International publication number: WO 2024/111425

(57) **Abstract**

An optical-fiber holding component (10) according to the present disclosure is disposed inside a ferrule (30) and holds a plurality of optical fibers (20), the optical-fiber holding component comprising: an outer surface (S10) including a first end surface (10a) and a second end surface (10b) that are arranged in a first direction (X); a plurality of through-holes (11) that penetrates from the first end surface (10a) to the second end surface (10b) in the first direction (X) and are arranged side by side in a second direction (Y) crossing the first direction (X); and at least one air discharge hole (16) that extends from the outer surface (S10) so as to cross the plurality of through-holes (11).

## Description

### TECHNICAL FIELD

The present disclosure relates to an optical-fiber holding component, an optical-fiber coupling structure body, an optical connector, and an optical coupling structure. This application claims priority to Japanese Patent Application No. 2022-187491 filed on November 24, 2022, the entire contents of which are incorporated herein by reference.

### BACKGROUND ART

Conventionally, an optical-fiber holding component (for example, Patent Literature 1) for holding a plurality of optical fibers is known. The optical-fiber holding component is disposed inside the ferrule in a state of holding a plurality of optical fibers, and is fixed to the ferrule in this state to be formed into a connector. As such an optical-fiber holding component, for example, a hole array in which a plurality of fiber holes for being inserted a plurality of optical fibers is formed may be used. In this case, for example, in a state where the optical fibers are inserted into the respective fiber holes, a liquid adhesive is injected into the fiber holes, and the adhesive is cured, whereby the optical fibers are fixed to the fiber holes.

### CITATION LIST

### PATENT LITERATURE

Patent literature 1: WO 2018/135368

### SUMMARY OF INVENTION

An optical-fiber holding component according to an aspect of the present disclosure is an optical-fiber holding component configured to hold a plurality of optical fibers by being disposed inside a ferrule. The optical-fiber holding component includes an outer surface including a first end surface and a second end surface aligned with each other in a first direction. The optical-fiber holding component has a plurality of through holes extending between the first end surface and the second end surface in the first direction and arranged side by side in a second direction intersecting the first direction, each of the plurality of through holes being capable of receiving a corresponding one of the plurality of optical fibers, and at least one air discharge hole extending from the outer surface in such a manner as to intersect the plurality of through holes, the at least one air discharge hole being configured to allow, when an adhesive is injected into the plurality of through holes, air present between an inner surface of each of the plurality of through holes and the adhesive to be discharged from the plurality of through holes to outside.

### BRIEF DESCRIPTION OF THE DRAWINGS

FIG. 1 is a perspective view showing an optical-fiber holding component according to a first embodiment.
FIG. 2 is a plan view showing the optical-fiber holding component of FIG. 1.
FIG. 3 is a cross-sectional view of the optical-fiber holding component taken along line III-III of FIG. 2.
FIG. 4 is a cross-sectional view showing the optical-fiber coupling structure body according to the first embodiment.
FIG. 5 is a cross-sectional view of the optical-fiber coupling structure body taken along line V-V of FIG. 4.
FIG. 6 is an exploded perspective view of the optical connector according to the first embodiment.
FIG. 7 is a perspective view of the optical connector of FIG. 6.
FIG. 8 is a cross-sectional view of the optical connector taken along line VIII-VIII of FIG. 7.
FIG. 9 is a perspective view showing the optical coupling structure according to the first embodiment.
FIG. 10 is a cross-sectional view showing an optical-fiber holding component according to modification 1 of the first embodiment.
FIG. 11 is a plan view showing an optical-fiber holding component according to modification 2 of the first embodiment.
FIG. 12 is a plan view showing an optical-fiber holding component according to modification 3 of the first embodiment.
FIG. 13 is a cross-sectional view showing an optical-fiber holding component according to modification 4 of the first embodiment.
FIG. 14 is a cross-sectional view showing an enlarged main portion of the optical-fiber holding component shown in FIG. 13.
FIG. 15 is a perspective view showing an optical-fiber holding component according to the second embodiment.
FIG. 16 is a plan view showing the optical-fiber holding component of FIG. 15.
FIG. 17 is a cross-sectional view showing the optical-fiber holding component taken along the line XVII-XVII of FIG. 16.
FIG. 18 is a plan view showing an optical-fiber holding component according to modification 1 of the second embodiment.
FIG. 19 is a plan view showing an optical-fiber holding component according to modification 2 of the second embodiment.
FIG. 20 is a perspective view showing an optical-fiber holding component according to a third embodiment.
FIG. 21 is a cross-sectional view showing the optical-fiber holding component of FIG. 20.
FIG. 22 is a perspective view showing an optical-fiber holding component according to a fourth embodiment.
FIG. 23 is a plan view showing the optical-fiber holding component of FIG. 22.

### DETAILED DESCRIPTION

### [Problems to be Solved by Present Disclosure]

When injecting the liquid adhesive into the fiber holes of the hole array, it is difficult to fill the space between the inner surfaces of the fiber holes and the optical fibers without a gap. When the adhesive is cured in a state in which the adhesive is not sufficiently filled in the fiber hole and air remains inside the fiber hole, a hollow is formed between the inner surface of the fiber hole and the optical fiber. Such a hollow is likely to be formed particularly at a portion where the gap between the inner surface of the fiber hole and the optical fiber is large. Such a formation of a hollow may cause problems such as a decrease in adhesiveness of the optical fiber to the fiber hole and an increase in load on the optical fiber due to thermal expansion of air in the fiber hole, and thus may affect the reliability of the optical fiber.

The present disclosure provides an optical-fiber holding component, an optical-fiber coupling structure body, an optical connector, and an optical coupling structure, which can maintain reliability of an optical fiber.

### [Advantageous Effects of Present Disclosure]

According to the optical-fiber holding component, the optical-fiber coupling structure body, the optical connector, and the optical coupling structure of the present disclosure, the reliability of the optical fiber can be maintained.

### [Description of Embodiments of Present Disclosure]

First, the contents of embodiments of the present disclosure will be listed and explained.
(1) An optical-fiber holding component according to an aspect of the present disclosure is an optical-fiber holding component configured to hold a plurality of optical fibers by being disposed inside a ferrule. The optical-fiber holding component includes an outer surface including a first end surface and a second end surface aligned with each other in a first direction. The optical-fiber holding component has a plurality of through holes extending between the first end surface and the second end surface in the first direction and arranged side by side in a second direction intersecting the first direction, and at least one air discharge hole extending from the outer surface in such a manner as to intersect the plurality of through holes.
   The optical-fiber holding component includes at least one air discharge hole extending from the outer surface to intersect with the plurality of through holes. The air discharge hole is configured to discharge air between the inner surface of the plurality of through holes and the adhesive from the plurality of through holes to the outside when the adhesive is injected into the plurality of through holes. By providing the air discharge hole, when the liquid adhesive is injected into each through hole, the air inside the through hole can be discharged to the outside of the through hole, and thus the adhesive can be sufficiently filled between the inner surface of the through hole and the optical fiber without a gap. This can reduce the curing of the adhesive in a state where air is remain between the inner surface of the through hole and the optical fiber. That is, it is possible to reduce the formation of a hollow between the inner surface of the through hole and the optical fiber. As a result, it is possible to reduce the occurrence of problems such as a decrease in the adhesiveness of the optical fiber to the inner surface of the through hole due to the formation of a hollow inside the through hole and an increase in the load on the optical fiber due to the thermal expansion of the air on the inside of the through hole. As a result, the reliability of the optical fiber can be maintained.
(2) In the optical-fiber holding component according to (1), the outer surface further includes a side surface extending along the first direction and the second direction between the first end surface and the second end surface. The side surface has an opening of the at least one air discharge hole. The at least one air discharge hole may extend from the side surface to the plurality of through holes. In this case, the air discharge hole may be extended upward from the plurality of through holes to the side surface. Since the air inside the through hole is relatively easy to move upward as compared with the liquid adhesive, the air inside the through hole can be efficiently discharged to the outside by configuring the air discharge hole to extend upward. Further, with such a configuration, the adhesive inside the through hole can be made less likely to leak from the air discharge hole onto the side surface.
(3) In the optical-fiber holding component according to (1) or (2), in a cross section that is perpendicular to the second direction, the at least one air discharge hole may extend in a direction that is inclined with respect to an imaginary straight line, the imaginary straight line being orthogonal to central axes of the plurality of through holes each extending in the first direction. In this way, when the air discharge hole extends in the inclined direction, the length of the air discharge hole from the through hole to the side surface can be increased as compared with the case where the air discharge hole extends along an imaginary straight line orthogonal to the central axes of the through hole. In this way, by increasing the distance of the path of the adhesive from the through hole to the side surface, the adhesive inside the through hole can be made less likely to leak from the air discharge hole onto the side surface.
(4) In the optical-fiber holding component according to any one of (1) to (3), the optical-fiber holding component may have a single air discharge hole as the at least one air discharge hole. The single air discharge hole may be connected to all the plurality of through holes. In this case, when the adhesive is injected into the through hole, air inside the through hole may be more reliably discharged to the outside through the air discharge hole, and thus, the formation of the hollow inside the through hole may be more effectively reduced.
(5) In the optical-fiber holding component according to any one of (1) to (3), the optical-fiber holding component may have a plurality of air discharge holes as the at least one air discharge hole, the plurality of air discharge holes being arranged side by side in the second direction in such a manner as to correspond to the plurality of through holes. Each of the plurality of air discharge holes may be connected to a corresponding one of the plurality of through holes. In this case, when the adhesive is injected into each through hole, it is possible to reduce the leakage of the adhesive from a through hole to an adjacent through hole through the air discharge hole. This makes it possible to individually and reliably bond the optical fibers to the respective through holes.
(6) In the optical-fiber holding component according to (5), an inner diameter of each of the plurality of air discharge holes may be smaller than an inner diameter of each of the plurality of through holes. By reducing the inner diameter of the air discharge hole in this way, the adhesive on the inside of the through hole can be made less likely to leak from the air discharge hole onto the outer surface.
(7) In the optical-fiber holding component according to (5) or (6), each of the plurality of air discharge holes may have an elongated hole shape extending in the first direction between the first end surface and the second end surface. **In** this case, when the adhesive is injected into the through hole, air may be discharged to the outside from a larger portion of the through hole through the air discharge hole, and thus, the hollow may be more effectively reduced from being formed inside the through hole.
(8) In the optical-fiber holding component according to any one of (5) to (7), a recess extending in the second direction may be formed on the outer surface in such a manner as to intersect all the plurality of air discharge holes. Each of the plurality of air discharge holes may be opened to a bottom surface of the recess. The presence of such a recess provides a space for storing the adhesive that has leaked from the air discharge hole, and thus the leakage of the adhesive from the air discharge hole onto the outer surface can be reduced more reliably.
(9) In the optical-fiber holding component according to any one of (1) to (8), each of the plurality of through holes may have a small-diameter portion capable of holding a coating-removed portion, the coating-removed portion being a portion of the plurality of optical fibers from which a coating has been removed, a large-diameter portion extending in the first direction between the small-diameter portion and the second end surface, capable of holding a coated portion, and having an inner diameter larger than an inner diameter of the small-diameter portion, the coated portion being another portion of the plurality of optical fibers on which the coating remains, and a diameter-increasing portion configured to connect the small-diameter portion and the large-diameter portion to each other and having an inner diameter that increases from the small-diameter portion toward the large-diameter portion. The at least one air discharge hole may be connected to the diameter-increasing portion from the outer surface. In this case, the gap between the optical fiber and the diameter-increasing portion tends to be particularly large, and thus air tends to particularly remain inside the diameter-increasing portion when the adhesive is injected into the through hole. Thus, when the air discharge hole is connected to the diameter-increasing portion, the air inside the through hole can be efficiently discharged to the outside.
(10) In the optical-fiber holding component according to (1) to (8), the optical-fiber holding component may further have a plurality of injection holes extending from the outer surface in such a manner as to intersect the plurality of through holes and each connected to a corresponding one of the plurality of through holes, the plurality of injection holes being capable of receiving an adhesive for bonding the plurality of optical fibers to the plurality of through holes. Each of the plurality of through holes may have a small-diameter portion capable of holding a coating-removed portion, the coating-removed portion being a portion of the plurality of optical fibers from which a coating has been removed, a large-diameter portion extending in the first direction between the holding portion and the second end surface, capable of holding a coated portion, and having an inner diameter larger than an inner diameter of the small-diameter portion, the coated portion being another portion of the plurality of optical fibers on which the coating remains, and a diameter-increasing portion configured to connect the small-diameter portion and the large-diameter portion to each other in the first direction and having an inner diameter that increases from the small-diameter portion toward the large-diameter portion in the first direction. The at least one air discharge hole may be connected to one of the small-diameter portion, the large-diameter portion, and the diameter-increasing portion. Each of the plurality of injection holes may be connected to a portion that is one of the small-diameter portion, the large-diameter portion, and the diameter-increasing portion and that is not connected to the at least one air discharge hole. In this case, since each injection hole for injecting the adhesive extends so as to intersect with the through hole and is connected to a corresponding one of the through holes, the adhesive can be individually injected into each through hole from a path different from the through hole. In this configuration, by adjusting the position of the injection hole with respect to the through hole, the injection amount of the adhesive and the like in consideration of the fluidity of the adhesive, the adhesive can be reliably filled between the optical fiber and the through hole without a gap, and the adhesive can be evenly distributed around the optical fiber. Thus, the stress generated when the adhesive is cured can be uniformly applied to the optical fiber, and thus, the change in the position of the optical fiber due to the stress applied in one direction can be reduced. Further, in the above configuration, the air discharge hole is not connected to the portion of the through hole to which the injection hole is connected. The hollow as described above is likely to be formed at a position away from the inside of the through hole than the portion into which the adhesive is injected. Thus, by configuring the air discharge hole to be not connected to the portion to which the injection hole is connected, the formation of a hollow inside the through hole can be effectively reduced.
(11) In the optical-fiber holding component according to (10), the at least one air discharge hole may be connected to the diameter-increasing portion. Each of the plurality of injection holes may be connected to the small-diameter portion or the large-diameter portion. In this case, the air discharge hole is connected to the diameter-increasing portion where air tends to be particularly remain, and thus the air inside the through hole can be efficiently discharged to the outside. Thus, the formation of the hollow inside the through hole can be effectively reduced.
(12) In the optical-fiber holding component according to (10), the at least one air discharge hole may be connected to the small-diameter portion. Each of the plurality of injection holes may be connected to the large-diameter portion. When injecting the adhesive into the through hole, air tends to be remained in the small-diameter portion away from the large-diameter portion where the injection hole is connected. Thus, by connecting the air discharge hole to the small-diameter portion, the air inside the through hole can be efficiently discharged to the outside. Thus, the formation of the hollow inside the through hole can be effectively reduced.
(13) In the optical-fiber holding component according to (10), the at least one air discharge hole may be connected to the large-diameter portion. Each of the plurality of injection holes may be connected to the small-diameter portion. When injecting the adhesive into the through hole, air tends to be remained in the large-diameter portion away from the small-diameter portion where the injection hole is connected. Thus, the air discharge hole is connected to the large-diameter portion, so that the air inside the through hole can be efficiently discharged to the outside. Thus, the formation of the hollow inside the through hole can be effectively reduced.
(14) In the optical-fiber holding component according to any one of (9) to (13), the small-diameter portion may be configured to hold the coating-removed portion such that the coating-removed portion is rotatable about a central axis line of the coating-removed portion. In this case, the position of the rotation direction of the optical fiber with respect to the optical-fiber holding component can be determined by performing rotational alignment of the coating-removed portion of the optical fiber in the small-diameter portion of the through hole.
(15) In the optical-fiber holding component according to any one of (1) to (8), the outer surface may further include a first wall surface aligned with the first end surface in the first direction between the first end surface and the second end surface, and a second wall surface extending along the first direction and the second direction in such a manner as to intersect the first wall surface between the first wall surface and the second end surface. The plurality of through holes may extend between the first end surface and the first wall surface in the first direction. The second wall surface may be formed at a position offset from the plurality of through holes in a third direction that intersects both the first direction and the second direction. In this case, the coating-removed portion of the optical fiber may be inserted into the through hole from the first wall surface toward the first end surface, and the coated portion of the optical fiber may be placed and fixed on the second wall surface. In such a configuration, the length of the through hole can be shortened compared to a configuration in which the through hole is formed from the first end surface to the second end surface. When the length of the through hole is shortened, air inside the through hole is likely to escape from the opening of the through hole to the outside, and thus the risk of air remaining inside the through hole can be reduced. Thus, the formation of the hollow inside the through hole can be effectively reduced.
(16) An optical-fiber coupling structure body according to an embodiment of the present disclosure includes the optical-fiber holding component according to any one of (1) to (15), the plurality of optical fibers each inserted in a corresponding one of the plurality of through holes, and an adhesive configured to fix the plurality of optical fibers to the plurality of through holes by being provided inside the plurality of through holes. Since the optical-fiber coupling structure body includes any one of the above-described optical-fiber holding components, it is possible to maintain the reliability of the optical fiber as described above.
(17) In the optical-fiber coupling structure body according to (16), each of the plurality of optical fibers may have at least one core in a region offset from a central axis line. In this case, the position of the optical fiber in the rotational direction with respect to the optical-fiber holding component can be determined by performing rotational alignment of the optical fiber in the through hole.
(18) An optical connector according to an embodiment of the present disclosure may include the optical-fiber coupling structure body according to (16) or (17), and the ferrule configured to accommodate at least a portion of the optical-fiber coupling structure body. Since the optical connector includes any one of the above-described optical-fiber holding components, it is possible to maintain the reliability of the optical fiber as described above.
(19) In the optical connector according to (18), the ferrule may have an accommodation hole configured to accommodate the optical-fiber holding component, and a plurality of fiber holding holes connected to the accommodation hole in the first direction, each of the plurality of fiber holding holes being configured to hold a corresponding one of the plurality of optical fibers extending from the optical-fiber holding component in the first direction. The outer surface may include a first side surface, a second side surface, and a third side surface, the first and second side surfaces facing each other with the plurality of through holes interposed between the first and second side surfaces in a third direction that intersects both the first and second directions, and the third side surface being configured to connect the first side surface and the second side surface to each other in the third direction. The accommodation hole may have a first inner surface and a second inner surface, the first inner surface being in contact with the second side surface, and the second inner surface being in contact with the third side surface. In this case, the second side surface and the third side surface of the optical-fiber holding component are in contact with the first inner surface and the second inner surface of the ferrule, respectively, and thus the position of the optical-fiber holding component with respect to the ferrule can be accurately defined.
(20) An optical coupling structure according to an embodiment of the present disclosure includes a first optical connector and a second optical connector as the optical connector according to (18) or (19), the first optical connector and the second optical connector face each other with a gap formed between the first and second optical connectors in the first direction. In this way, when the first optical connector and the second optical connector are not connected by physical contact (PC), a pressing force for PC connecting the first optical connector and the second optical connector is not required, and thus more optical fibers can be easily connected at once.

### [Details of Embodiments of Present Disclosure]

Specific examples of an optical-fiber holding component, an optical-fiber coupling structure body, an optical connector, and an optical coupling structure according to embodiments of the present disclosure will be described below with reference to the drawings. The present disclosure is not limited to these examples, but is defined by the scope of the claims, and is intended to include all modifications within the meaning and scope equivalent to the scope of the claims. In the following description, the same elements are denoted by the same reference numerals in the description of the drawings, and redundant description will be appropriately omitted.

### [First Embodiment]

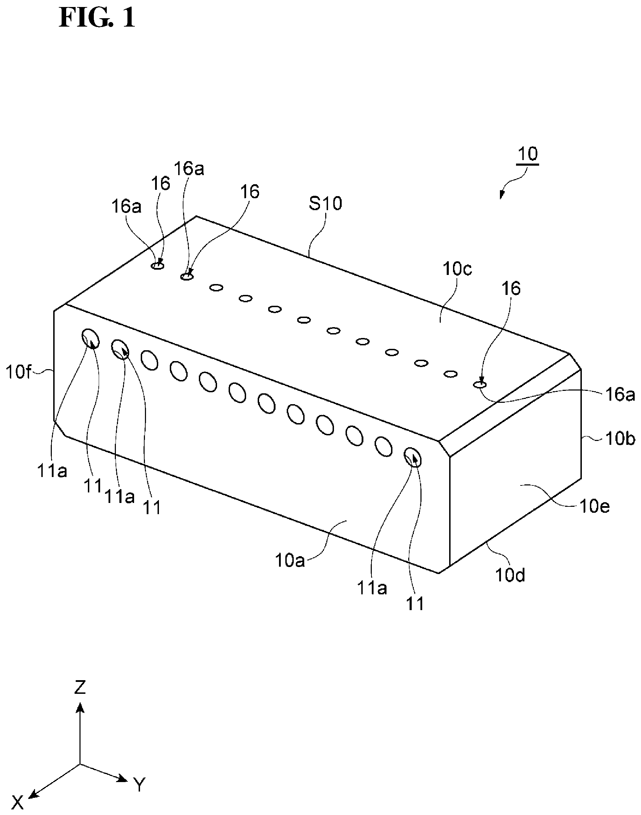

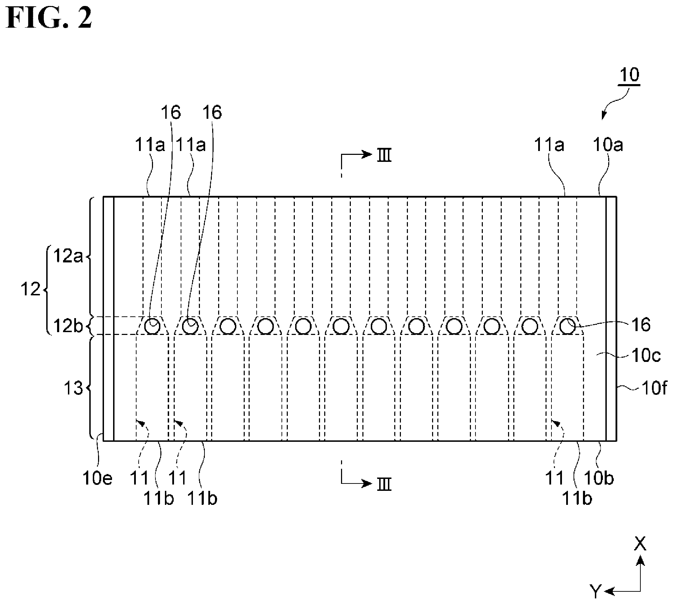

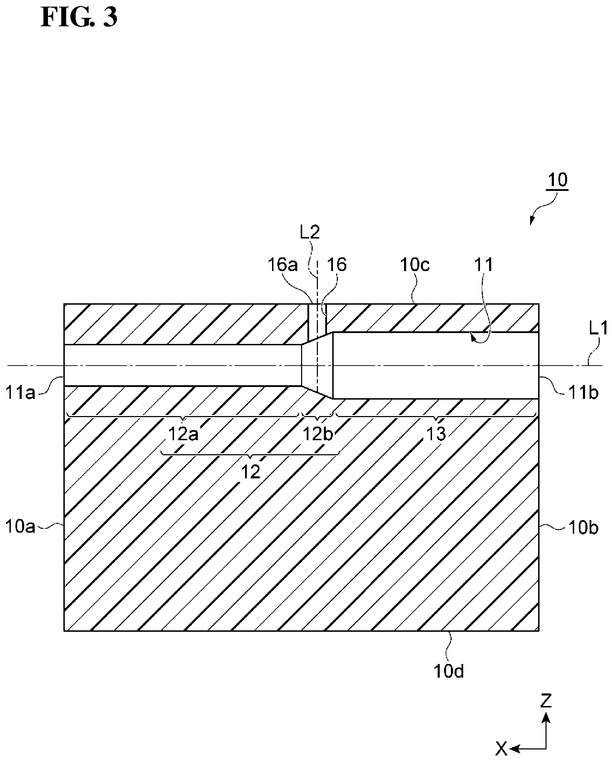

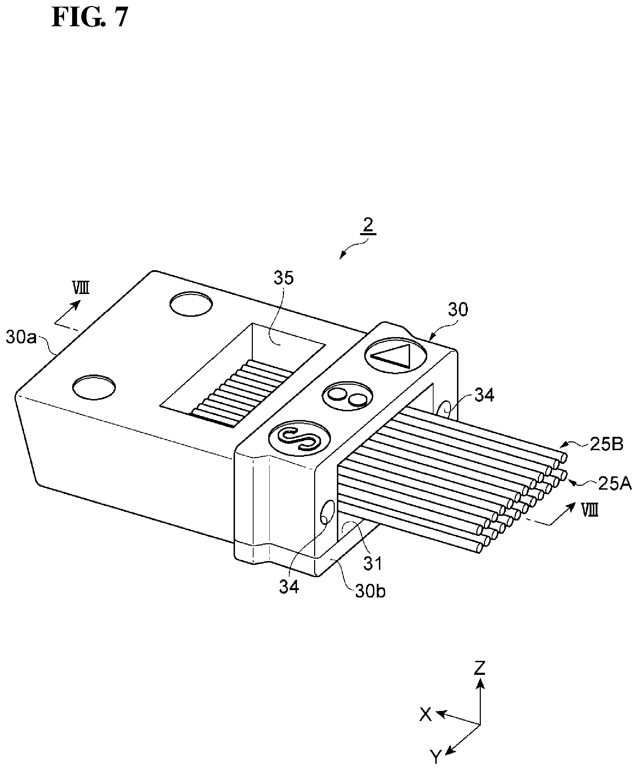

FIG. 1 is a perspective view of an optical-fiber holding component 10 according to a first embodiment. FIG. 2 is a plan view showing the optical-fiber holding component 10. FIG. 3 is a cross-sectional view of the optical-fiber holding component 10 taken along line III-III of FIG. 2. The optical-fiber holding component 10 shown in FIG. 1, FIG. 2, and FIG. 3 is a component for holding a plurality of optical fibers 20. The optical-fiber holding component 10 is disposed inside a ferrule 30 in a state of holding the plurality of optical fibers 20 (refer to FIG. 7). In FIG. 1, an XYZ orthogonal coordinate system is shown for easy understanding. As shown in FIG. 1, the optical-fiber holding component 10 has, for example, a rectangular parallelepiped appearance in which a Y direction (second direction) is a longitudinal direction, an X direction (first direction) is a transverse direction, and a Z direction (third direction) is a thickness direction. In the following description, "up and down" may be defined by relative position of the Z coordinate, "front and rear" may be defined by relative position of the X coordinate, and "right and left" may be defined by relative position of the Y coordinate. The larger Z coordinate represents the "up". The larger X coordinate represents the "front". The larger Y coordinate represents the "right".

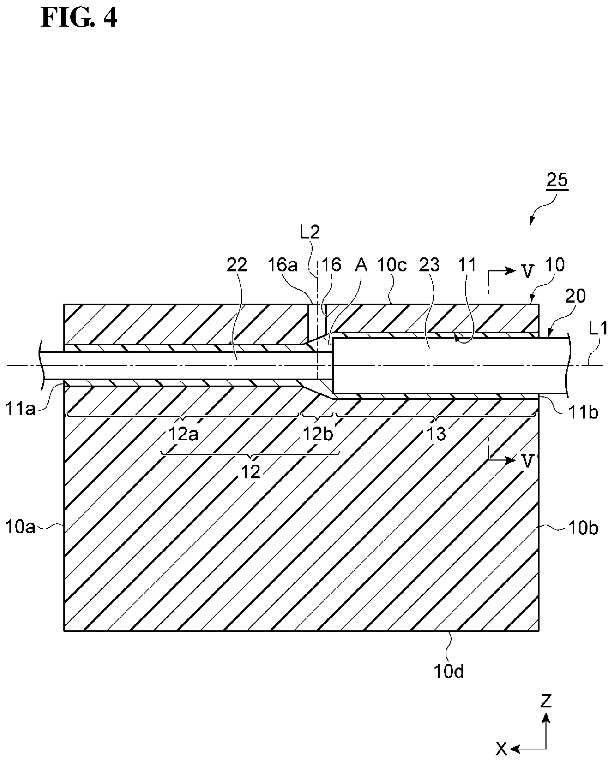

The optical-fiber holding component 10 is made of, for example, a resin that can transmit ultraviolet rays used for curing an adhesive A (refer to FIG. 4) described later. The optical-fiber holding component 10 may be made of, for example, quartz glass that can transmit ultraviolet rays. The phrase "capable of transmitting ultraviolet rays" means that the transmissivity of the material of the thickness 350 nm with respect to light of wavelengths from 400 nm to 3 mm is 40% or more. When such a resin or quartz glass is used as the material of the optical-fiber holding component 10, the optical-fiber holding component 10 can be manufactured at low cost and with high accuracy. The optical-fiber holding component 10 is not limited to these materials, and may be made of metal. When a metal is used as the material of the optical-fiber holding component 10, high dimensional accuracy can be maintained, and thus the optical-fiber holding component 10 can be manufactured with higher accuracy. Further, when the optical-fiber holding component 10 is made of a material such as quartz glass or metal, the frictional resistance between the optical-fiber holding component 10 and the plurality of optical fibers 20 can be reduced, and thus the rotational alignment of the plurality of optical fibers 20 can be easily performed in a state where the plurality of optical fibers 20 are disposed in the optical-fiber holding component 10.

As shown in FIG. 1, an outer surface S10 of the optical-fiber holding component 10 includes, for example, a front surface 10a (first end surface), a rear surface 10b (second end surface), an upper surface 10c (first side surface), a lower surface 10d (second side surface), a side surface 10e (third side surface), and a side surface 10f. The front surface 10a is a front end surface of the optical-fiber holding component 10 in the X direction. The front surface 10a is, for example, a plane along the YZ plane. The rear surface 10b is a rear end surface of the optical-fiber holding component 10 in the X direction, and is disposed side by side with the front surface 10a in the X direction. The rear surface 10b is, for example, a plane along the YZ plane. The normal direction of the rear surface 10b coincides with, for example, the normal direction of the front surface 10a.

The upper surface 10c is an upper end surface of the optical-fiber holding component 10 in the Z direction. The upper surface 10c is, for example, a plane along the XY plane, and connects the front surface 10a and the rear surface 10b. The lower surface 10d is an end surface that locates at the lower end of the optical-fiber holding component 10 in the Z direction, and is disposed side by side with the upper surface 10c in the Z direction. The upper surface 10c and the lower surface 10d are disposed on both sides in the Z direction, interposing a plurality of through holes 11 described later. The lower surface 10d is, for example, a plane along the XY plane, and connects the front surface 10a and the rear surface 10b in the X direction at a position opposed to the upper surface 10c in the Z direction. The normal direction of the lower surface 10d coincides with, for example, the normal direction of the upper surface 10c. The normal directions of the upper surface 10c and the lower surface 10d are orthogonal to the normal directions of the front surface 10a and the rear surface 10b, for example. In this case, the upper surface 10c and the lower surface 10d are perpendicular to the front surface 10a and the rear surface 10b.

The side surface 10e is a right end surface of the optical-fiber holding component 10 in the Y direction and faces the Y direction. The side surface 10e is, for example, a plane along the XZ plane, and connects the front surface 10a and the rear surface 10b. The side surface 10f is, for example, a left end surface of the optical-fiber holding component 10 in the Y direction and faces the opposite side in the Y direction. The side surface 10f is, for example, a plane along the XZ plane, and connects the front surface 10a and the rear surface 10b at a position opposed to the side surface 10e in the Y direction. The normal direction of the side surface 10f coincides with, for example, the normal direction of the side surface 10e. The normal directions of the side surface 10e and the side surface 10f are orthogonal to the normal directions of the front surface 10a and the rear surface 10b and the normal directions of the upper surface 10c and the lower surface 10d, for example. In this case, the side surface 10e and the side surface 10f are perpendicular to the front surface 10a, the rear surface 10b, the upper surface 10c, and the lower surface 10d.

As shown in FIG. 1 and FIG. 2, the optical-fiber holding component 10 further includes the plurality of through holes 11 for respectively holding the plurality of optical fibers 20 (refer to FIG. 4). The through holes 11 extend from the front surface 10a to the rear surface 10b along the X direction, and are arranged in a line in the Y direction between the front surface 10a and the rear surface 10b. Each through hole 11 is formed in a position closer to the upper surface 10c than to the lower surface 10d in the Z direction, for example. As shown in FIG. 2, each through hole 11 extends linearly along the X direction from the front surface 10a to the rear surface 10b, and opens in the front surface 10a and the rear surface 10b. Each through hole 11 has, for example, a circular shape when viewed in the X direction.

The front surface 10a has a plurality of openings 11a where the plurality of through holes 11 are opened, respectively. The openings 11a are arranged in a line in the Y direction to correspond to the through holes 11. The rear surface 10b has a plurality of openings 11b (refer to FIG. 2) through which the plurality of through holes 11 are opened, respectively. The openings 11b are arranged in a line in the Y direction to correspond to the through holes 11. The inner diameter of each opening 11b is larger than the inner diameter of each opening 11a. It is noted that, although FIG. 1 and FIG. 2 illustrate a case where twelve through holes 11 are arranged in a line at equal intervals in the Y direction, the number of through holes 11 is not limited to twelve, and may be another number such as four, eight, or sixteen. The through holes 11 do not need to be arranged in a row, and may be arranged in two or more rows.

As shown in FIG. 3, each through hole 11 has, for example, a small-diameter portion 12a, a diameter-increasing portion 12b, and a large-diameter portion 13. The small-diameter portion 12a and the diameter-increasing portion 12b constitute a holding portion 12 for holding a coating-removed portion 22 (refer to FIG. 4), which will be described later. The large-diameter portion 13 is configured as a fixing portion for fixing a coated portion 23 (refer to FIG. 4) described later.

The holding portion 12 is located between the front surface 10a and the rear surface 10b and closer to the front surface 10a in the X direction. The small-diameter portion 12a of the holding portion 12 extends linearly in the X direction from the front surface 10a toward the rear surface 10b. The small-diameter portion 12a has an inner diameter that is capable of receiving the coating-removed portion 22 of an optical fiber 20. The small-diameter portion 12a is configured to rotatably hold the coating-removed portion 22 about a central axis line L1 of the optical fiber 20. The small-diameter portion 12a is configured to rotatably hold the coating-removed portion 22 about the central axis line L1, which means that the inner diameter of the small-diameter portion 12a is set to be large enough to allow the coating-removed portion 22 to rotate about the central axis line L1, and small enough to define the position of the coating-removed portion 22 in the YZ plane. The inner diameter of the small-diameter portion 12a is constant at each position along the X direction of the small-diameter portion 12a. In this specification, the expression "the inner diameter is constant" includes both the case where the inner diameter is completely constant and the case where the inner diameter is substantially constant within the range of manufacturing error or the like.

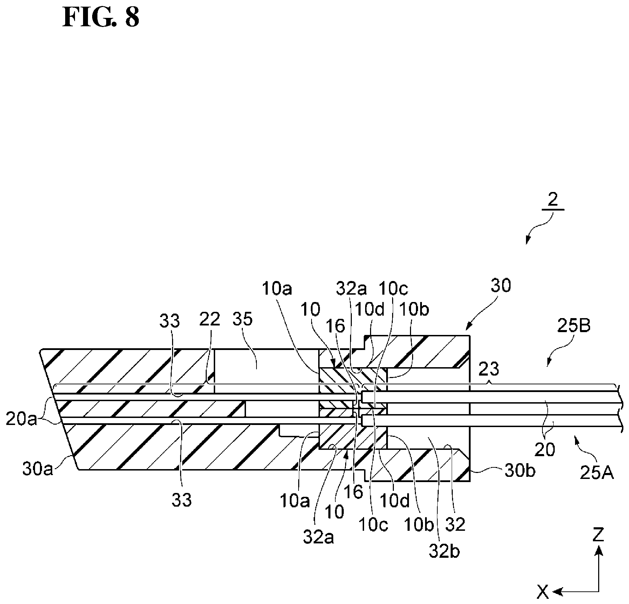

The inner diameter of the small-diameter portion 12a is set to be larger than the outer diameter of the coating-removed portion 22 in consideration of the rotational alignment of the optical fiber 20 in the through hole 11. If the inner diameter of the small-diameter portion 12a is too large, when the optical-fiber holding component 10 is mounted on the ferrule 30, the central axes of a fiber holding hole 33 in the ferrule 30 and the central axes of the optical fiber 20 do not match, and the mounting operation may be difficult (refer to FIG. 8). Taking these into consideration, for example, when the outer diameter of the coating-removed portion 22 is 124 µm to 126 µm, the inner diameter of the small-diameter portion 12a may be 126 µm to 156 µm.

The large-diameter portion 13 is located between the front surface 10a and the rear surface 10b and closer to the rear surface 10b in the X direction. The large-diameter portion 13 extends linearly in the X direction from the rear surface 10b toward the small-diameter portion 12a. The large-diameter portion 13 has an inner diameter that is capable of receiving the coated portion 23 of the optical fiber 20. The large-diameter portion 13 is configured to rotatably hold the coated portion 23 about the central axis line L1. Thus, the inner diameter of the large-diameter portion 13 is set to be large enough to allow the coated portion 23 to rotate about the central axis line L1 and small enough to define the position of the coated portion 23 in the YZ plane. The inner diameter of the large-diameter portion 13 is constant at each position along the X direction.

The inner diameter of the large-diameter portion 13 is set to be larger than the outer diameter of the coated portion 23 in consideration of the rotational alignment of the optical fiber 20 in the through hole 11. If the inner diameter of the large-diameter portion 13 is too large, when the optical-fiber holding component 10 is mounted on the ferrule 30, the central axes of the fiber holding hole 33 in the ferrule 30 and the central axes of the optical fiber 20 do not match, and the mounting operation may be difficult (refer to FIG. 8). Taking these into consideration, for example, when the outer diameter of the coated portion 23 is 190 µm to 210 µm, the inner diameter of the large-diameter portion 13 may be 210 µm to 240 µm.

The diameter-increasing portion 12b is located between the small-diameter portion 12a and the large-diameter portion 13 in the X direction. The diameter-increasing portion 12b connects the small-diameter portion 12a and the large-diameter portion 13. The inner diameter of the diameter-increasing portion 12b is set to gradually increase from the small-diameter portion 12a toward the large-diameter portion 13 in the X direction. The inner diameter of the connection end of the diameter-increasing portion 12b with respect to the small-diameter portion 12a (that is, the front end of the diameter-increasing portion 12b in the X direction) is equal to the inner diameter of the small-diameter portion 12a, and the inner diameter of the connection end of the diameter-increasing portion 12b with respect to the large-diameter portion 13(that is, the rear end of the diameter-increasing portion 12b in the X direction) is equal to the inner diameter of the large-diameter portion 13. The length of the diameter-increasing portion 12b in the X direction may be, for example, 100 µm.

As shown in FIG. 1 and FIG. 2, the optical-fiber holding component 10 further includes a plurality of air discharge holes 16. The air discharge holes 16 are arranged in a line in the Y direction to correspond to the through holes 11, and extend from the upper surface 10c in the Z direction to be connected to a corresponding one of the through holes 11. Each air discharge hole 16 is connected to a corresponding one of each through hole 11, which means that one air discharge hole 16 is connected to one through hole 11, and that one air discharge hole 16 is not connected to two or more through holes 11. The shape of the air discharge hole 16 viewed in the Z direction is, for example, a circular shape.

The air discharge hole 16 extends linearly in the Z direction from the upper surface 10c to the through hole 11 so as to intersect with the through hole 11, for example. A central axis line L2 of the air discharge hole 16 is orthogonal to the central axis line L1 of the through hole 11, for example. An opening 16a of the air discharge hole 16 is formed in the upper surface 10c. The air discharge hole 16 extends downward from the opening 16a in the Z direction and is connected to the diameter-increasing portion 12b of the through hole 11. Thus, when viewed in the Z direction, the air discharge hole 16 is disposed to overlap the diameter-increasing portion 12b.

The air discharge hole 16 is configured to discharge air, which may be remain inside the through hole 11 when the adhesive A (refer to FIG. 4) is injected into the through hole 11, to the outside of the through hole 11. Specifically, the air discharge hole 16 has an inner diameter which air inside the through hole 11 can pass therethrough, and forms a path through which air can pass therethrough from the upper surface 10c to the through hole 11. The inner diameter which air can pass therethrough means an inner diameter of a size to the extent that air inside the through hole 11 can flow inside the air discharge hole 16 and flow out from the opening 16a to the outside of the optical-fiber holding component 10. The inner diameter of the air discharge hole 16 may be constant at each position along the Z direction of the air discharge hole 16, for example. The size of the inner diameter of the air discharge hole 16 may be such that air can pass therethrough, but when the inner diameter of the air discharge hole 16 is excessively large, there is a concern that the liquid adhesive A injected into the through hole 11 may flow through the air discharge hole 16 and leak out onto the upper surface 10c. Thus, the inner diameter of the air discharge hole 16 is selected to be an inner diameter which air can pass therethrough and that prevents the liquid adhesive A from flowing and leaking to the upper surface 10c.

For example, the inner diameter of the air discharge hole 16 may be smaller than the inner diameter of the through hole 11. The inner diameter of the through hole 11 here may be the smallest inner diameter (that is, the minimum value of the inner diameter of the through hole 11) among the inner diameters of each portion of the through hole 11 along the X direction. In the embodiment, the minimum value of the inner diameter of the through hole 11 refers to the inner diameter of the small-diameter portion 12a. Thus, the inner diameter of the air discharge hole 16 may be smaller than the inner diameter of the small-diameter portion 12a. Thus, the inner diameter of the opening 16a may be smaller than the inner diameter of the opening 11a. It is noted that, when the inner diameter of the air discharge hole 16 varies at each position along the Z direction, the smallest inner diameter (that is, the minimum value of the inner diameter of the air discharge hole 16) among the inner diameters of each portion of the air discharge hole 16 along the X direction may be used. The inner diameter of the air discharge hole 16 may be, for example, 10 µm or more, which allows air to be discharged. Further, in order to avoid a situation in which the through holes 11 adjacent to each other are connected through the air discharge hole 16, the inner diameter of the air discharge hole 16 may be equal to or smaller than the pitch of the through holes 11 (the distance between the centers of the through holes 11). For example, when the pitch of the through holes 11 is 250 µm, the inner diameter of the air discharge hole 16 may be 250 µm or less. The inner diameter of the air discharge hole 16 may be equal to or larger than the inner diameter of the small-diameter portion 12a or equal to or larger than the inner diameter of the large-diameter portion 13.

It is noted that, the air discharge hole 16 is not necessarily connected to the diameter-increasing portion 12b of the through hole 11, and may be connected to the small-diameter portion 12a or the large-diameter portion 13 of the through hole 11. Further, in FIG. 1 and FIG. 2, although it shows a case where twelve air discharge holes 16 are arranged in a line in the Y direction to correspond to twelve through holes 11 arranged in a line in the Y direction, the number of air discharge holes 16 may vary depending on the number of through holes 11. Furthermore, the number of the air discharge holes 16 is not necessarily the same as the number of the through holes 11, and may be larger than the number of the through holes 11. In this case, two or more air discharge holes 16 may be connected to one through hole 11. For example, the air discharge hole 16 may be connected to any two or more different portions of the small-diameter portion 12a, the diameter-increasing portion 12b, and the large-diameter portion 13 of the through hole 11.

FIG. 4 is a cross-sectional view showing an optical-fiber coupling structure body 25 according to the embodiment. The optical-fiber coupling structure body 25 includes the optical-fiber holding component 10 described above and the plurality of optical fibers 20. Each optical fiber 20 is, for example, an optical fiber that requires rotational alignment (that is, adjustment of position about the central axis line L1) in the optical-fiber holding component 10. Each optical fiber 20 is, for example, a multi-core fiber (MCF). Each optical fiber 20 may be, for example, a polarization maintaining fiber (PMF).

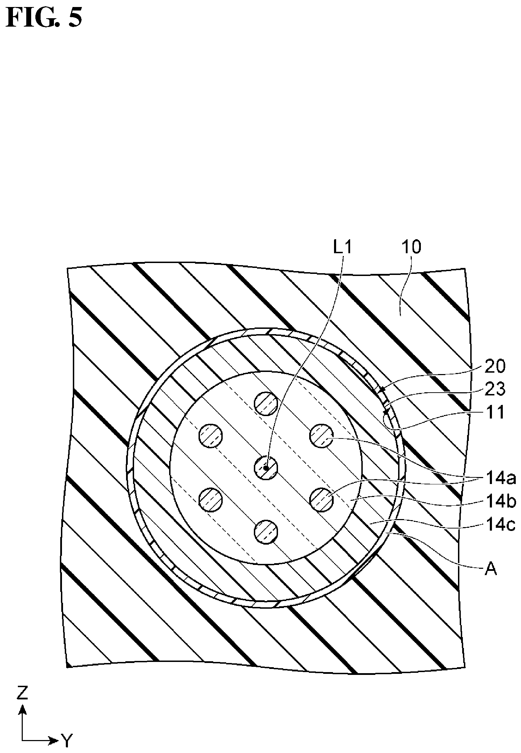

FIG. 5 is a cross-sectional view of the optical-fiber coupling structure body 25 taken along the line V-V of FIG. 4. As shown in FIG. 5, the optical fiber 20 has at least one core 14a in a region excluding the central axis line L1 (that is, a region offset from the central axis line L1). In the example shown in FIG. 5, the optical fiber 20 has one core 14a on the central axis line L1, and further has a plurality of (for example, six) cores 14a disposed at equal intervals about the central axis line L1. The optical fiber 20 further includes a cladding 14b covering the cores 14a and a coating 14c surrounding the cladding 14b.

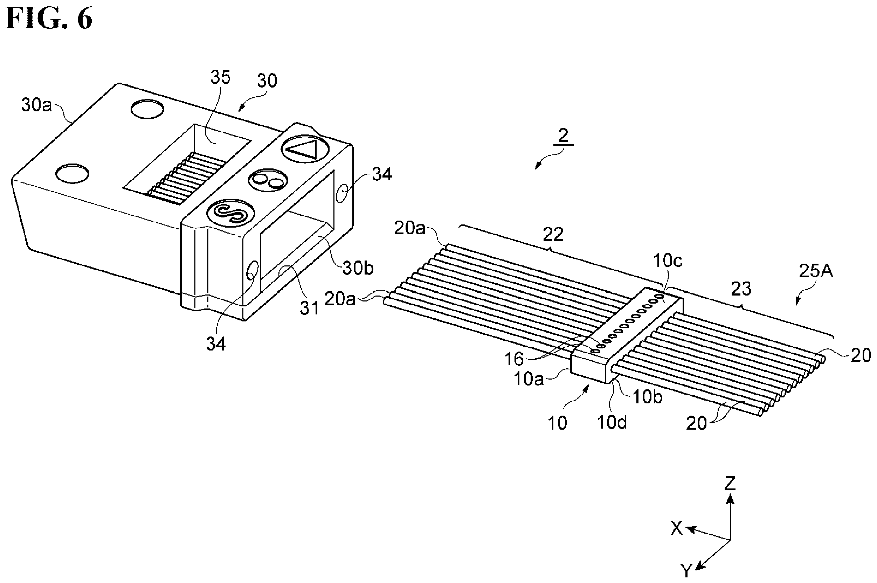

The coated portion 23 of the optical fiber 20 is a portion of the optical fiber 20 where the coating 14c remains. Thus, the coated portion 23 is configured to include the plurality of cores 14a, the cladding 14b, and the coating 14c. The coating-removed portion 22 of the optical fiber 20 shown in FIG. 4 is a portion where a glass portion is exposed by removing a predetermined length of the coating 14c from a distal end surface 20a (refer to FIG. 6) of the optical fiber 20. Thus, the coating-removed portion 22 includes the plurality of cores 14a and the claddings 14b. In the coating-removed portion 22, the surface of the cladding 14b is exposed to the outside. The outer diameter of the coated portion 23 is larger than the outer diameter of the coating-removed portion 22 by the thickness of the coating 14c.

In FIG. 4, when the optical-fiber coupling structure body 25 is manufactured, first, the optical fiber 20 is rotationally aligned in a state where the optical fiber 20 is inserted into the through hole 11 of the optical-fiber holding component 10. In a state where the optical fiber 20 is inserted into the through hole 11, the coating-removed portion 22 of the optical fiber 20 is disposed in the small-diameter portion 12a of the through hole 11, and the coated portion 23 of the optical fiber 20 is disposed in the large-diameter portion 13 of the through hole 11. The rotational alignment of the optical fiber 20 defines the position of the optical fiber 20 with respect to the optical-fiber holding component 10 on the XY plane, and also defines the position (angle) of the optical fiber 20 about the central axis line L1. Then, for example, the liquid adhesive A is injected into the inside of the through hole 11 from the opening 11b of the rear surface 10b. The adhesive A is, for example, a cured product of an ultraviolet (UV) curable resin. The adhesive A may be a cured product of a thermosetting resin.

The adhesive A injected into the through hole 11 spreads from the large-diameter portion 13 to the small-diameter portion 12a of the through hole 11, and fills the gap between the inner surface of the through hole 11 and the optical fiber 20. The adhesive A cures by being irradiated with ultraviolet rays from outside the optical-fiber holding component 10 in a state while filled in the through holes 11. Thus the coating-removed portion 22 and the coated portion 23 of the optical fiber 20 are respectively adhered and fixed to the small-diameter portion 12a and the large-diameter portion 13 of the through hole 11. In this way, the optical-fiber coupling structure body 25 in which the optical fibers 20 are fixed to the optical-fiber holding component 10 is obtained. It is noted that, the state in which the through hole 11 is filled with the adhesive A means a state in which the adhesive A is distributed without a gap in a region between the inner surface of the through hole 11 and the optical fiber 20. In a state where the adhesive A is filled in the through hole 11, the adhesive A does not protrude from the through hole 11 in the X direction, and does not protrude upward from the opening 16a of the air discharge hole 16.

FIG. 6 is an exploded perspective view of an optical connector 2 according to the embodiment. FIG. 7 is a perspective view showing the optical connector 2. The optical connector 2 includes, for example, the ferrule 30, a first optical-fiber coupling structure body 25A, and a second optical-fiber coupling structure body 25B. The first optical-fiber coupling structure body 25A and the second optical-fiber coupling structure body 25B have the same configuration as the optical-fiber coupling structure body 25 described above. It is noted that, in FIG. 6, the second optical-fiber coupling structure body 25B is omitted. As shown in FIG. 7, the first optical-fiber coupling structure body 25A and the second optical-fiber coupling structure body 25B are inserted into the ferrule 30 in a state where they are stacked on each other in the Z direction, for example. The first optical-fiber coupling structure body 25A and the second optical-fiber coupling structure body 25B are stacked in the Z direction, for example, so that their upper surfaces 10c face each other.

FIG. 8 is a cross-sectional view of the optical connector 2 taken along line VIII-VIII of FIG. 7. As shown in FIG. 8, the appearance of the ferrule 30 is, for example, substantially rectangular parallelepiped. The ferrule 30 includes a front surface 30a that is located at the front end in the X direction and a rear surface 30b that is located at the rear end in the X direction. The front surface 30a is, for example, slightly inclined with respect to the XZ plane. The front surface 30a is, for example, in a state in which there is almost no step difference from the distal end surface 20a of each optical fiber 20. The rear surface 30b is formed with an opening 31 capable of receiving a stacked body of the first optical-fiber coupling structure body 25A and the second optical-fiber coupling structure body 25B stacked in the Z direction.

The ferrule 30 has an accommodation hole 32 and the plurality of fiber holding holes 33 on the inside. The accommodation hole 32 is a hole extending from the opening 31 in the X direction, and holds the stacked body of the first optical-fiber coupling structure body 25A and the second optical-fiber coupling structure body 25B introduced from the opening 31. The accommodation hole 32 includes a pair of inner surfaces 32a (first inner surfaces) facing each other in the Z direction and a pair of inner surfaces 32b (second inner surfaces) facing each other in the Y direction. For example, the inner surface 32a is a plane along the XY plane, and the inner surface 32b is a plane along the XZ plane. The inner surface 32a is, for example, perpendicular to the inner surface 32b.

In a state where the stacked body of the first optical-fiber coupling structure body 25A and the second optical-fiber coupling structure body 25B is disposed in the accommodation hole 32, the lower surface 10d of the first optical-fiber coupling structure body 25A and the lower surface 10d of the second optical-fiber coupling structure body 25B are in contact with the pair of inner surfaces 32a of the accommodation hole 32. Thus, the positions of the first optical-fiber coupling structure body 25A and the second optical-fiber coupling structure body 25B with respect to the accommodation hole 32 in the Z direction are defined. Further, the side surface 10e of the first optical-fiber coupling structure body 25A and the side surface 10f of the second optical-fiber coupling structure body 25B are in contact with one inner surface 32b of the accommodation hole 32, and the side surface 10f of the first optical-fiber coupling structure body 25A and the side surface 10e of the second optical-fiber coupling structure body 25B are in contact with the other inner surface 32b of the accommodation hole 32. Thus, the positions of the first optical-fiber coupling structure body 25A and the second optical-fiber coupling structure body 25B with respect to the accommodation hole 32 in the Y direction are defined.

As shown in FIG. 8, the plurality of fiber holding holes 33 extend in the X direction between the accommodation hole 32 and the front surface 30a. The plurality of fiber holding holes 33 are, for example, arranged in a two dimensional manner on the front surface 30a. The plurality of fiber holding holes 33 are disposed in two rows so as to correspond to the plurality of optical fibers 20 arranged in a row in the first optical-fiber coupling structure body 25A and the plurality of optical fibers 20 arranged in a row in the second optical-fiber coupling structure body 25B. The plurality of fiber holding holes 33 are inserted with the plurality of coating-removed portions 22 of the optical fibers 20 extending forward from the first optical-fiber coupling structure body 25A and the plurality of coating-removed portions 22 of the optical fibers 20 extending forward from the second optical-fiber coupling structure body 25B. Further, the ferrule 30 is formed with a pair of guiding holes 34 (refer to FIG. 6). The pair of guiding holes 34 extend the ferrule 30 from the front surface 30a to the rear surface 30b in the X direction, and are formed on both sides interposing the plurality of fiber holding holes 33 in the Y direction.

A window 35 for injecting an adhesive is formed in the upper surface of the ferrule 30. Although the adhesive is omitted in FIG. 8, the adhesive here may be the same as the adhesive A described above. The adhesive injected from the window 35 is cured in each fiber holding hole 33 into which the coating-removed portion 22 of each optical fiber 20 is inserted, and thus the coating-removed portion 22 of each optical fiber 20 is fixed to each fiber holding hole 33. As a result, the optical connector 2 in which the first optical-fiber coupling structure body 25A and the second optical-fiber coupling structure body 25B are fixed in the ferrule 30 is obtained.

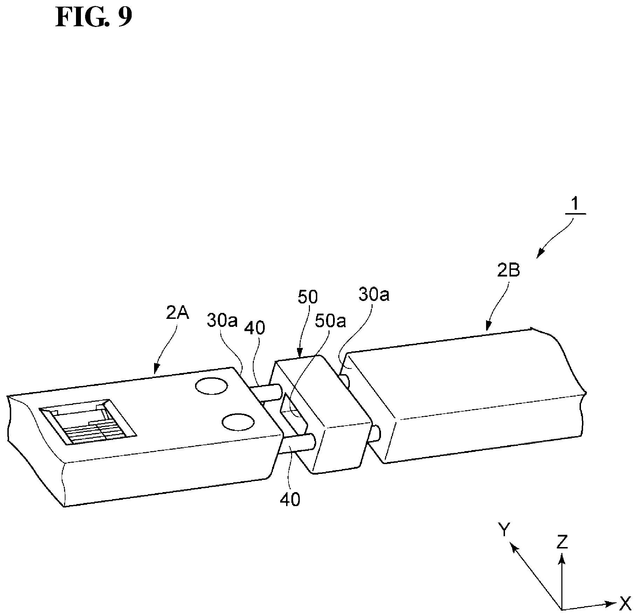

FIG. 9 is a perspective view showing an optical coupling structure 1 according to the embodiment. The optical coupling structure 1 includes a first optical connector 2A, a second optical connector 2B, a pair of guiding pins 40, and a spacer 50. The first optical connector 2A and the second optical connector 2B have the same configuration as the optical connector 2 described above. In the optical coupling structure 1, the front surface 30a of the first optical connector 2A and the front surface 30a of the second optical connector 2B face each other in the X direction with a gap interposed therebetween. The pair of guiding pins 40 are fitted into the pair of guiding holes 34 of the first optical connector 2A and the pair of guiding holes 34 of the second optical connector 2B. Thus, the positions of the first optical connector 2A and the second optical connector 2B in the YZ plane are defined.

The spacer 50 is a plate-like member having an opening 50a, and is disposed between the front surface 30a of the first optical connector 2A and the front surface 30a of the second optical connector 2B in the X direction. The opening 50a allows a plurality of optical paths extending between the first optical connector 2A and the second optical connector 2B to pass therethrough. The spacer 50 abuts on the front surface 30a of the first optical connector 2A and the front surface 30a of the second optical connector 2B in the X direction, and thereby a gap between the first optical connector 2A and the second optical connector 2B in the X direction is defined.

The effects obtained by the optical-fiber holding component 10, the optical-fiber coupling structure body 25, the optical connector 2, and the optical coupling structure 1 according to the embodiment described above will be described.

As described above, the optical-fiber holding component 10 includes the air discharge hole 16 intersecting the through hole 11. The air discharge hole 16 is configured to discharge air between the inner surface of the through hole 11 and the adhesive A from the through hole 11 to the outside when the adhesive A is injected into the through hole 11. By providing the air discharge hole 16, when the liquid adhesive A is injected into the through hole 11, air inside the through hole 11 can be discharged to the outside of the through hole 11, and thus the adhesive A can be sufficiently filled between the inner surface of the through hole 11 and the optical fiber 20 without a gap. This can reduce the curing of the adhesive A in a state where air remain between the inner surface of the through hole 11 and the optical fiber 20. That is, it is possible to reduce the formation of a hollow between the inner surface of the through hole 11 and the optical fiber 20. As a result, it is possible to reduce the occurrence of problems such as a decrease in the adhesiveness of the optical fiber 20 to the inner surface of the through hole 11 due to the formation of a hollow inside the through hole 11 and an increase in the load on the optical fiber 20 due to the thermal expansion of the air on the inside of the through hole 11. As a result, the reliability of the optical fiber 20 can be maintained.

As in the embodiment, the air discharge hole 16 may extend from the upper surface 10c to the through hole 11. In this case, the air discharge hole 16 may be extended upward from the through hole 11 to the upper surface 10c. Since the air inside the through hole 11 is relatively easy to move upward due to the influence of gravity as compared with the liquid adhesive A, the air discharge hole 16 is configured to extend upward, and thus the air inside the through hole 11 can be efficiently discharged to the outside. Further, with such a configuration, the adhesive A inside the through hole 11 can be made less likely to leak from the air discharge hole 16 onto the upper surface 10c.

As in the embodiment, each air discharge hole 16 may be connected to a corresponding one of each through hole 11. In this case, when the adhesive A is injected into each of the through holes 11, it is possible to reduce the leakage of the adhesive A from the through hole 11 to the adjacent through hole 11 through the air discharge hole 16. This makes it possible to individually and reliably bond the optical fibers 20 to the respective through holes 11.

As in the embodiment, the inner diameter of each air discharge hole 16 may be smaller than the inner diameter of each through hole 11. By reducing the inner diameter of the air discharge hole 16 in this way, the adhesive A on the inside of the through hole 11 can be made less likely to leak from the air discharge hole 16 onto the upper surface 10c.

As in the embodiment, each air discharge hole 16 may be connected from the upper surface 10c to the diameter-increasing portion 12b of each through hole 11. Since the gap between the optical fiber 20 and the diameter-increasing portion 12b tends to be particularly large, and thus air tends to particularly remain inside the diameter-increasing portion 12b when the adhesive A is injected into the through hole 11. Thus, by configuring the air discharge hole 16 which is connected to the diameter-increasing portion 12b, the air inside the through hole 11 can be efficiently discharged to the outside.

As in the embodiment, the small-diameter portion 12a may be configured to rotatably hold the coating-removed portion 22 about the central axis line L1 of the coating-removed portion 22. In this case, the position of the optical fiber 20 in the rotational direction with respect to the optical-fiber holding component 10 can be determined by performing rotational alignment of the coating-removed portion 22 in the small-diameter portion 12a.

As in the embodiment, each optical fiber 20 may have at least one core in a region offset from the central axis line L1. In this case, the position of the optical fiber 20 in the rotational direction with respect to the optical-fiber holding component 10 can be determined by performing rotational alignment of the optical fiber 20 in the through hole 11.

As in the embodiment, the accommodation hole 32 of the ferrule 30 may include the inner surface 32a contacting the lower surface 10d and the inner surface 32b contacting the side surface 10e. In this case, the lower surface 10d and the side surface 10e of the optical-fiber holding component 10 are in contact with the inner surface 32a and the inner surface 32b of the ferrule 30, respectively, and thus the position of the optical-fiber holding component 10 with respect to the ferrule 30 can be accurately defined.

As in the embodiment, the first optical connector 2A and the second optical connector 2B face each other with a gap interposed therebetween in the X direction. In this way, when the first optical connector 2A and the second optical connector 2B are not connected by physical contact (PC), the pressing force for PC connecting the first optical connector 2A and the second optical connector 2B is not required, and thus the more optical fibers 20 can be easily connected at once.

### [Modification 1]

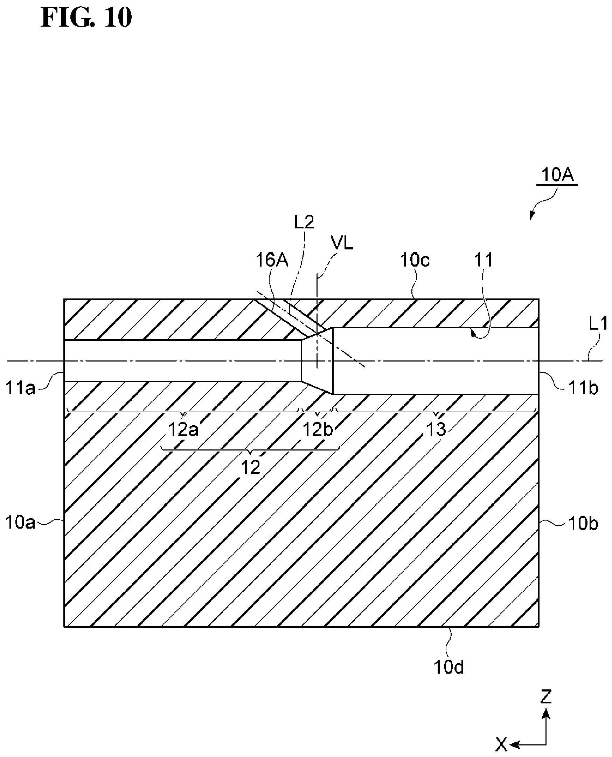

FIG. 10 is a cross-sectional view showing an optical-fiber holding component 10A according to modification 1. In the optical-fiber holding component 10A, the direction in which an air discharge hole 16A extends is different from that of the above-described optical-fiber holding component 10. In the XZ cross section shown in FIG. 10, the air discharge hole 16A extends in a direction inclined from the Z direction perpendicular to the through hole 11 extending in the X direction. In other words, the central axis line L1 of the air discharge hole 16A extends in a direction inclined from an imaginary straight line VL orthogonal to the central axis line L1 of the through hole 11 in the XZ cross section. The central axis line L1 of the air discharge hole 16A extends in a direction inclined to both the X direction and the Z direction in the XZ cross section. When the air discharge hole 16A is inclined in this way, the air discharge hole 16A from the through hole 11 to the upper surface 10c can be made longer than when the air discharge hole extends along the imaginary straight line VL orthogonal to the central axis line L1 of the through hole 11. In this way, by increasing the distance of the path of the adhesive A from the through hole 11 to the upper surface 10c, the adhesive A inside the through hole 11 can be made less likely to leak from the air discharge hole 16A onto the upper surface 10c.

### [Modification 2]

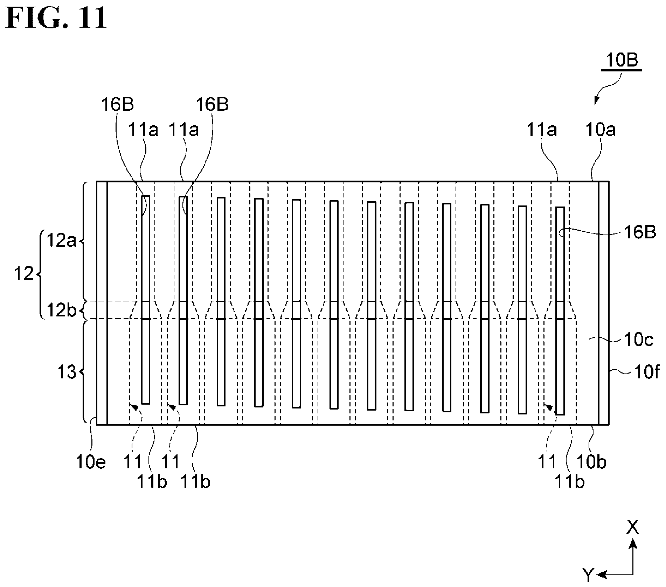

FIG. 11 is a plan view showing an optical-fiber holding component 10B according to modification 2. In the optical-fiber holding component 10B, the shape of an air discharge hole 16B is different from that of the optical-fiber holding component 10 described above. In the optical-fiber holding component 10B, the shape of the air discharge hole 16B is an elongated hole shape extending along the X direction. That is, the air discharge hole 16B is formed to extend along the X direction at a position overlapping the through hole 11 in the Z direction. More specifically, the air discharge hole 16B continuously extends in the X direction so as to overlap with the entire large-diameter portion 13 in the Z direction from the small-diameter portion 12a through the diameter-increasing portion 12b. The air discharge hole 16B extends downward from the upper surface 10c and is connected to all of the small-diameter portion 12a, the diameter-increasing portion 12b, and the large-diameter portion 13. The shape of the air discharge hole 16B when viewed from above is, for example, a rectangular shape extending in the X direction, but is not limited thereto, and may be another shape such as an elliptical shape. When the air discharge hole 16B has an elongated hole shape, air may be discharged to the outside from a larger portion of the through hole 11 through the air discharge hole 16B when the adhesive A is injected into the through hole 11, and thus, the formation of a hollow inside the through hole 11 may be more effectively reduced.

### [Modification 3]

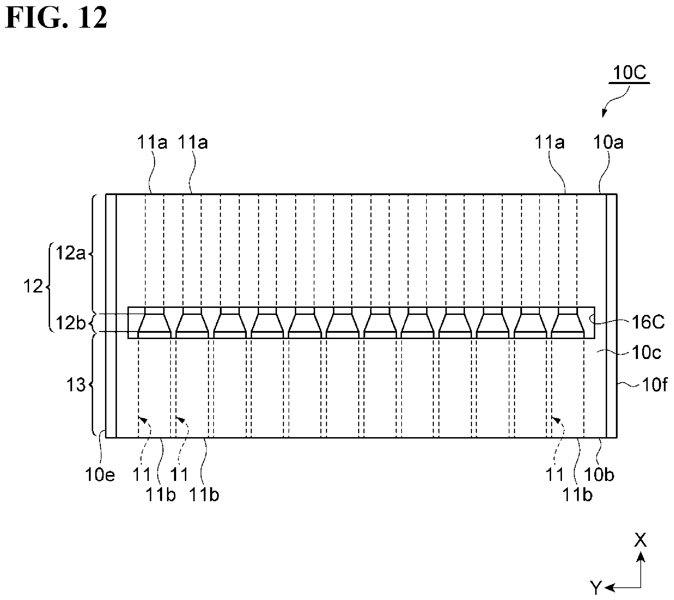

FIG. 12 is a plan view showing an optical-fiber holding component 10C according to modification 3. The optical-fiber holding component 10C differs from the optical-fiber holding component 10 described above in that it has one air discharge hole 16C. As shown in FIG. 12, the air discharge hole 16C is an elongated hole shape extending along the Y direction. The air discharge hole 16C extends in the Y direction so as to intersect with all of the through holes 11 when viewed from above. The air discharge hole 16C extends from the upper surface 10c in the Z direction and is connected to all of the through holes 11. The air discharge hole 16C extends in the Y direction so as to overlap with the diameter-increasing portions 12b of all the through holes 11 in the Z direction, and is connected to the diameter-increasing portions 12b of all the through holes 11 in the Z direction. The air discharge hole 16C viewed from above has, for example, a rectangular shape extending in the Y direction. As described above, when the air discharge hole 16C connected to all of the plurality of through holes 11 is provided, air inside the through holes 11 may be more reliably discharged to the outside through the air discharge hole 16C when the adhesive A is injected into the through holes 11, and thus, the formation of a hollow inside the through holes 11 may be more effectively reduced.

### [Modification 4]

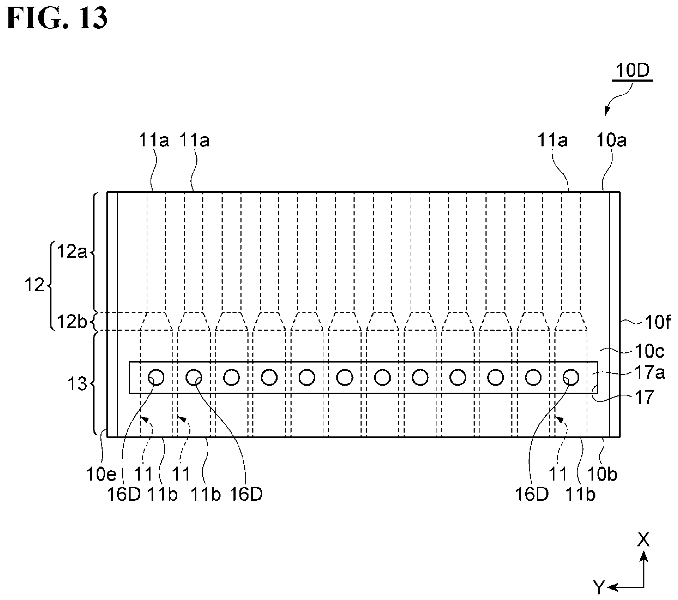

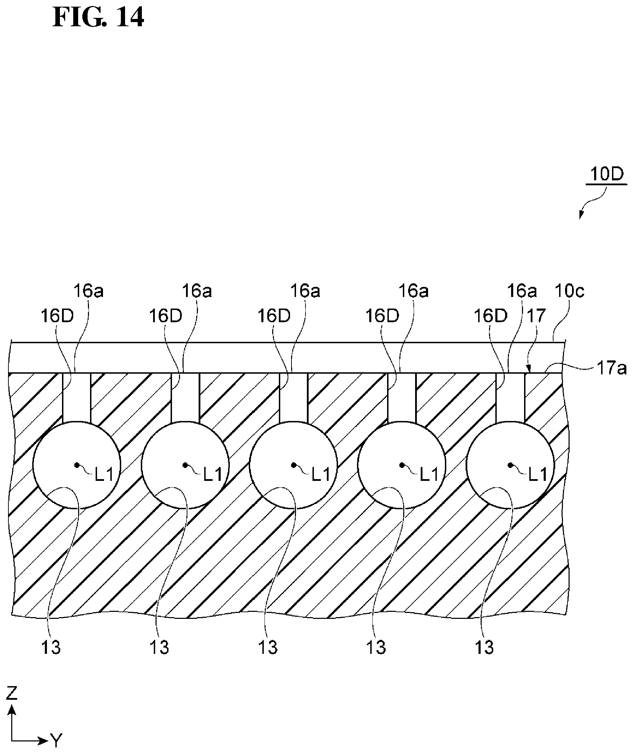

FIG. 13 is a plan view showing an optical-fiber holding component 10D according to modification 4. FIG. 14 is a cross-sectional view showing an enlarged main portion of the optical-fiber holding component 10D. In the optical-fiber holding component 10D, a recess 17 extending in the Y direction is formed in the upper surface 10c. The recess 17 extends in the Y direction so as to intersect with all of the through holes 11 when viewed from above. The recess 17 extends linearly along the Y direction so as to overlap the large-diameter portions 13 of all the through holes 11 in the Z direction, for example. The recess 17 is formed in the upper surface 10c, for example, at a position offset to the opening 11b side from the rear surface 10b where the front surface 10a of the large-diameter portion 13 is formed. The recess 17 viewed from above has, for example, a rectangular shape extending in the Y direction. A bottom surface 17a of the recess 17 is recessed downward from the upper surface 10c, and forms a step with respect to the upper surface 10c. The bottom surface 17a is, for example, a plane along the XY plane, and is located between the upper surface 10c and the through hole 11.

A plurality of air discharge holes 16D are formed to connect the recess 17 and the plurality of through holes 11 in the Z direction. Thus, the upper end of each air discharge hole 16D intersects the recess 17, and the lower end of each air discharge hole 16D intersects each through hole 11. The upper end of each air discharge hole 16D is opened in the bottom surface 17a of the recess 17. The lower end of each air discharge hole 16D extends downward from the bottom surface 17a and is connected to the large-diameter portion 13 of each through hole 11. The recess 17 provides a space for storing the adhesive A that has leaked from the air discharge hole 16D. Thus, the leakage of the adhesive A from the air discharge hole 16D onto the upper surface 10c can be reduced more reliably. In the optical-fiber holding component 10D, instead of the recess 17, a hole portion extending in the Y direction may be formed so as to intersect with all of the air discharge holes 16D. In this case, the hole portion may be formed to intersect all of the air discharge holes 16D between the upper surface 10c and the through hole 11. For example, the hole portion may extend in the Y direction so as to intersect the upper end portions of all the air discharge holes 16D (specifically, the portions of the air discharge holes 16D that are offset downward from the upper surface 10c). In this configuration as well, a space for storing the adhesive A that has leaked from the air discharge hole 16D is provided by the hole portion. Thus, the leakage of the adhesive A onto the upper surface 10c can be reduced more reliably.

### [Second Embodiment]

Next, an optical-fiber holding component 110 according to the second embodiment will be described. In the following description of the second embodiment, the description of the same parts as those of the first embodiment will be omitted as appropriate, and parts different from those of the first embodiment will be mainly described.

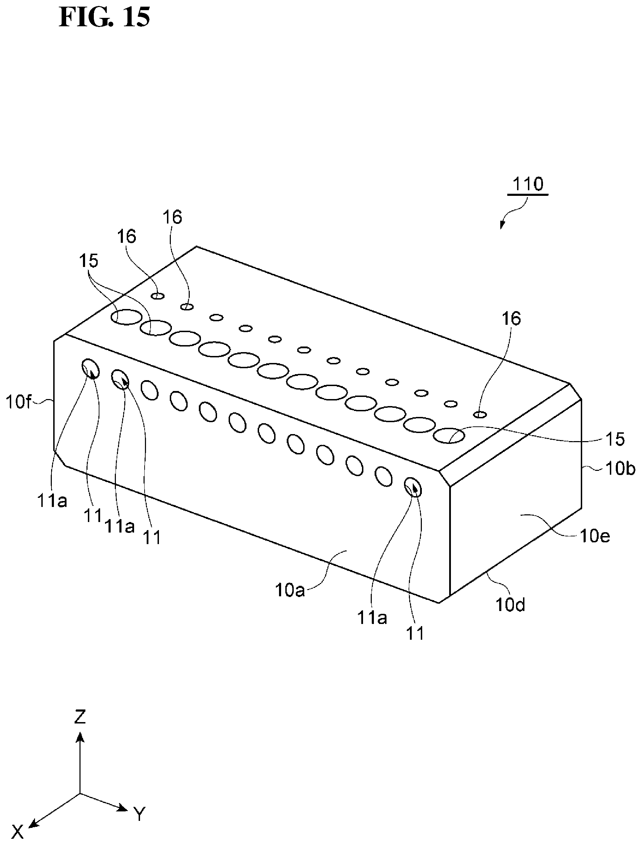

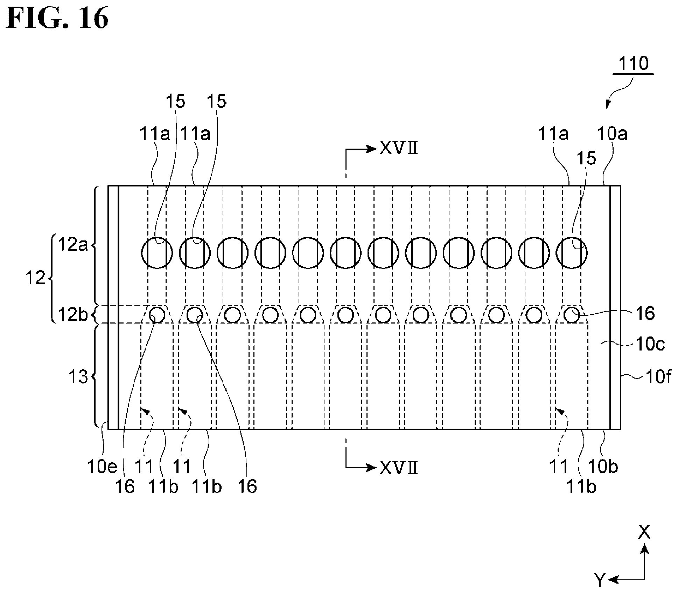

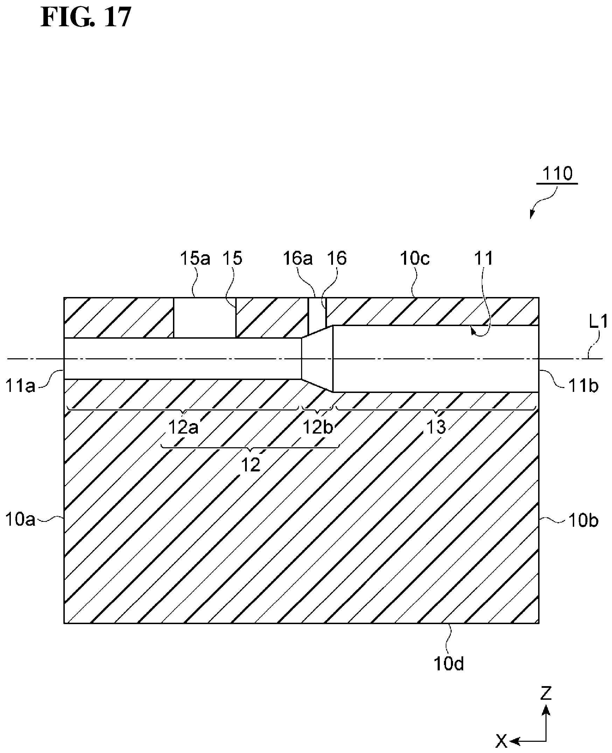

FIG. 15 is a perspective view showing the optical-fiber holding component 110 according to a second embodiment. FIG. 16 is a plan view showing the optical-fiber holding component 110. FIG. 17 is a cross-sectional view showing the optical-fiber holding component 110 taken along line XVII-XVII of FIG. 16. As shown in FIG. 15 and FIG. 16, the optical-fiber holding component 110 includes a plurality of injection holes 15 in addition to the plurality of air discharge holes 16 according to the first embodiment. Each injection hole 15 is a hole for injecting the adhesive A into each through hole 11. The injection holes 15 are arranged in a line in the Y direction to correspond to the through holes 11, and extend from the upper surface 10c in the Z direction to be connected to a corresponding one of the through holes 11. Each injection hole 15 is connected to a corresponding one of each through hole 11, which means that one injection hole 15 is connected to one through hole 11, and that one injection hole 15 is not connected to two or more through holes 11. Thus, each injection hole 15 is provided independently for each through hole 11, and the adhesive A injected into one injection hole 15 is introduced only into one through hole 11 connected to the one injection hole 15.

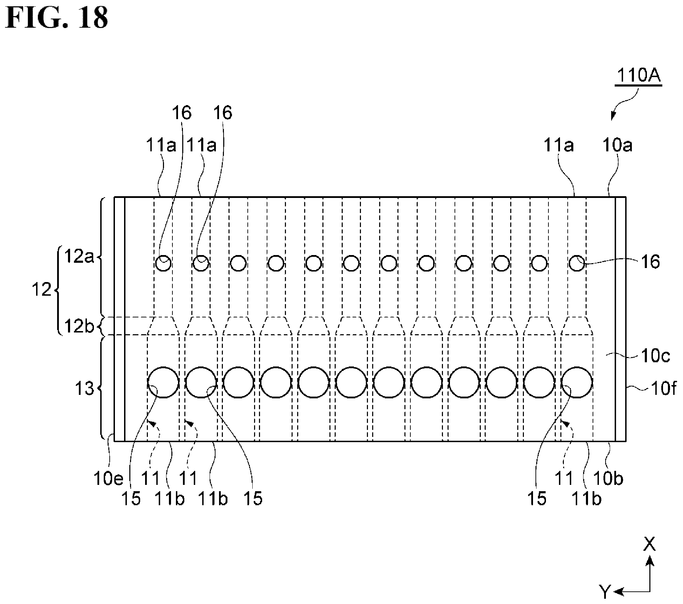

As shown in FIG. 17, the injection hole 15 extends linearly in the Z direction from the upper surface 10c to the through hole 11 so as to intersect with the through hole 11, for example. An opening of the injection hole 15 is formed in the upper surface 10c. As shown in FIG. 17 and FIG. 18, the injection hole 15 extends downward from the upper surface 10c in the Z direction and is connected to the small-diameter portion 12a of the through hole 11. Thus, when viewed in the Z direction, the injection hole 15 is disposed so as to overlap the small-diameter portion 12a. In this way, the injection hole 15 is connected to a portion (for example, the small-diameter portion 12a) different from a portion (for example, the diameter-increasing portion 12b) to which the air discharge hole 16 is connected. The shape of the injection hole 15 viewed in the Z direction is, for example, a circular shape.

The inner diameter of the injection hole 15 is large enough to introduce the adhesive A into the through hole 11. The size that allows the adhesive A to be introduced into the through hole 11 means a size that allows the liquid adhesive A to flow through the injection hole 15 and reach the through hole 11. The inner diameter of the injection hole 15 is, for example, set to be smaller than the pitch of the through holes 11. The inner diameter of the injection hole 15 is, for example, in a range larger than the inner diameter of the small-diameter portion 12a and smaller than the inner diameter of the large-diameter portion 13. Thus, the inner diameter of the injection hole 15 is larger than the inner diameter of the air discharge hole 16. The inner diameter of the injection hole 15 may be, for example, 10 µm or more, which allows the introduction of the adhesive. In order to avoid a situation in which the through holes 11 adjacent to each other are connected through the injection hole 15, the inner diameter of the injection hole 15 may be equal to or smaller than the pitch of the through holes 11 (for example, the distance between the centers of the through holes 11 adjacent to each other). For example, when the pitch of the through holes 11 is 250 µm, the inner diameter of the injection hole 15 may be 250 µm or less. The inner diameter of the injection hole 15 may be equal to or smaller than the inner diameter of the small-diameter portion 12a or may be equal to or larger than the inner diameter of the large-diameter portion 13 as long as the adhesive A can be introduced into the through hole 11.

In the optical-fiber holding component 110, the injection hole 15 for injecting the adhesive A extends so as to intersect with the through hole 11 and is connected to a corresponding one of the through holes 11, and thus the adhesive A can be individually injected into the through hole 11 from a path different from the through hole 11. In this configuration, by adjusting the position of the injection hole 15 with respect to the through hole 11 and the injection amount of the adhesive A, and the like in consideration of the fluidity of the adhesive A, the adhesive A can be reliably filled between the optical fiber 20 and the through hole 11 without a gap, and the adhesive A can be evenly distributed around the optical fiber 20. Thus, the stress generated when the adhesive A is cured can be uniformly applied to the optical fiber 20, and thus, the change in the position of the optical fiber 20 due to the stress in one direction can be reduced. Further, in the above configuration, the air discharge hole 16 is not connected to the portion of the through hole 11 to which the injection hole 15 is connected. When the adhesive A is injected into the through hole 11, a hollow is likely to be formed at a position away from the inside of the through hole 11 than the portion into which the adhesive A is injected. Thus, by adopting a configuration in which the air discharge hole 16 is connected to the small-diameter portion 12a different from the diameter-increasing portion 12b to which the injection hole 15 is connected, the formation of a hollow inside the through hole 11 can be effectively reduced.

### [Modification 1]

FIG. 18 is a cross-sectional view showing an optical-fiber holding component 110A according to modification 1. In the optical-fiber holding component 110A, the arrangement of the injection hole 15 and the air discharge hole 16 is different from that of the optical-fiber holding component 110. In the optical-fiber holding component 110A, the injection hole 15 extends from the upper surface 10c in the Z direction and is connected to the large-diameter portion 13 of the through hole 11. Thus, when viewed in the Z direction, the injection hole 15 is disposed to overlap the large-diameter portion 13. The air discharge hole 16 extends from the upper surface 10c in the Z direction and is connected to the small-diameter portion 12a of the through hole 11. Thus, when viewed in the Z direction, the air discharge hole 16 is disposed to overlap the small-diameter portion 12a. When viewed in the Z direction, the air discharge hole 16 is disposed at a position offset toward the rear surface 10b from the front surface 10a where the opening 11a of the small-diameter portion 12a is formed.

When the adhesive A is injected into the large-diameter portion 13 from the injection hole 15, air inside the small-diameter portion 12a near the front surface 10a is likely to be discharged to the outside from the opening 11a of the front surface 10a. Thus, by placing the air discharge hole 16 at a position further away from the front surface 10a than near the front surface 10a, air inside the small-diameter portion 12a can be efficiently discharged to the outside through the air discharge hole 16. When viewed in the Z direction, the air discharge hole 16 is disposed, for example, at the center of the small-diameter portion 12a in the X direction. In the optical-fiber holding component 110A, when the adhesive A is injected into the through hole 11, air tends to be remained in the small-diameter portion 12a away from the large-diameter portion 13 to which the injection hole 15 is connected. Thus, the air discharge hole 16 is connected to the small-diameter portion 12a, so that the air inside the through hole 11 can be efficiently discharged to the outside. This can effectively reduce the formation of a hollow inside the through hole 11.

### [Modification 2]

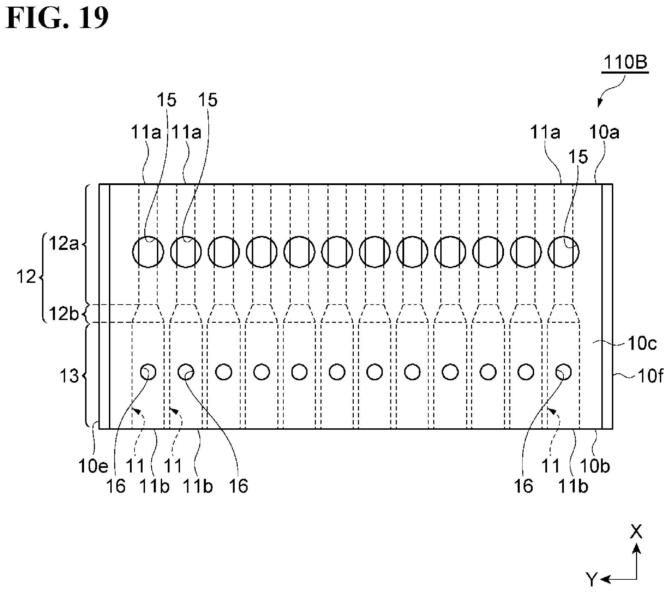

FIG. 19 is a cross-sectional view showing an optical-fiber holding component 110B according to modification 1. In the optical-fiber holding component 110B, the

arrangement of the injection hole 15 and the air discharge hole 16 is different from that of the optical-fiber holding component 110. In the optical-fiber holding component 110B, the injection hole 15 extends from the upper surface 10c in the Z direction and is connected to the small-diameter portion 12a of the through hole 11. Thus, when viewed in the Z direction, the injection hole 15 is disposed so as to overlap the small-diameter portion 12a. The air discharge hole 16 extends from the upper surface 10c in the Z direction and is connected to the large-diameter portion 13 of the through hole 11. Thus, when viewed in the Z direction, the air discharge hole 16 is disposed to overlap the large-diameter portion 13. When viewed in the Z direction, the air discharge hole 16 is disposed at a position offset to the front surface 10a side from the rear surface 10b where the opening 11b of the large-diameter portion 13 is formed.

When the adhesive A is injected into the small-diameter portion 12a from the injection hole 15, air inside the large-diameter portion 13 near the rear surface 10b is likely to be discharged to the outside from the opening 11b of the rear surface 10b. Thus, by placing the air discharge hole 16 at a position further away from rear surface 10b than near t rear surface 10b, air inside the large-diameter portion 13 can be efficiently discharged to the outside through the air discharge hole 16. When viewed in the Z direction, the air discharge hole 16 is disposed, for example, in the center of the large-diameter portion 13 in the X direction. In the optical-fiber holding component 110B, when the adhesive A is injected into the through hole 11, air tends to be remained in the large-diameter portion 13 away from the small-diameter portion 12a to which the injection hole 15 is connected. Thus, the air discharge hole 16 is connected to the large-diameter portion 13, so that the air inside the through hole 11 can be efficiently discharged to the outside. This can effectively reduce the formation of a hollow inside the through hole 11.

### [Third Embodiment]

Next, an optical-fiber holding component 210 according to the third embodiment will be described. In the following description of the second embodiment, the description of the same parts as those of the first embodiment will be omitted as appropriate, and parts different from those of the first embodiment will be mainly described.

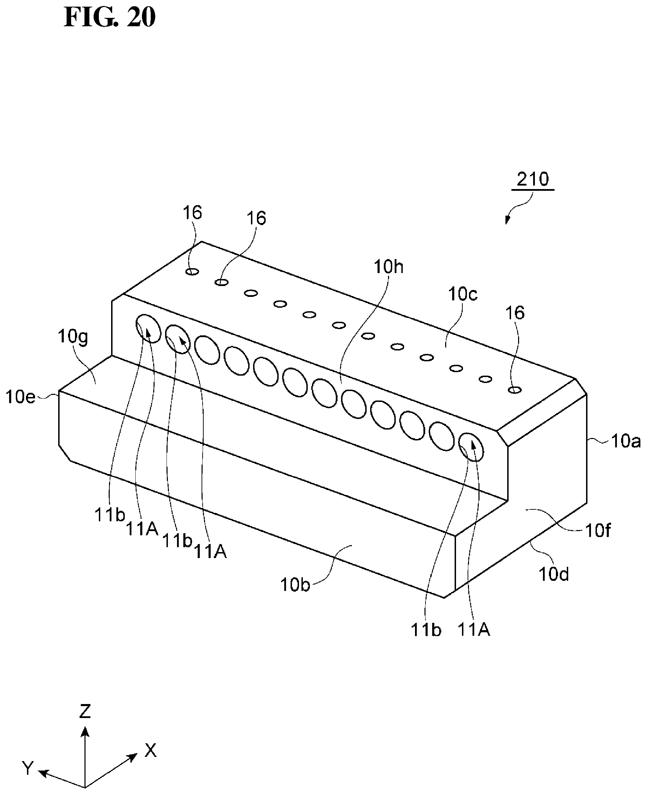

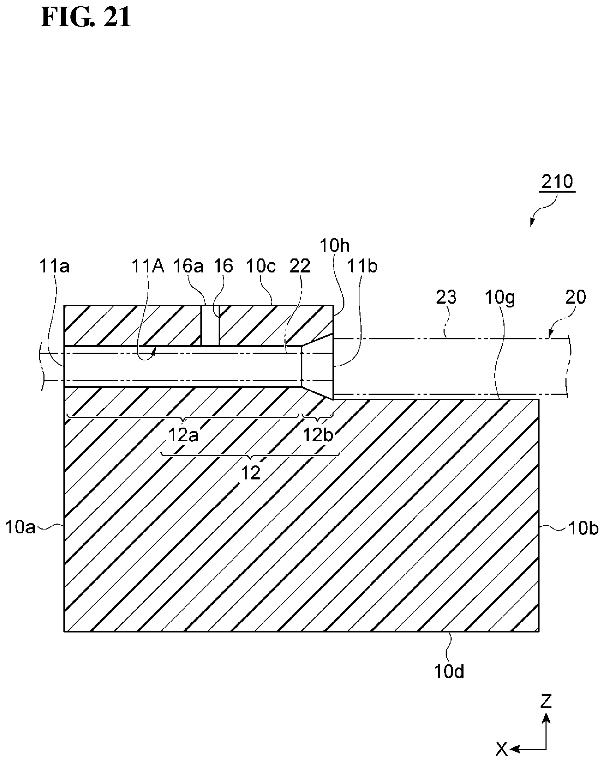

FIG. 20 is a plan view showing the optical-fiber holding component 210 according to a second embodiment. FIG. 21 is a cross-sectional view of the optical-fiber holding component 210. The optical-fiber holding component 210 includes a wall surface 10h (first wall surface) arranged in the X direction with the front surface 10a between the front surface 10a and the rear surface 10b, and a wall surface 10g (second wall surface) extending along the XY plane so as to be perpendicular to the front surface 10a between the front surface 10a and the rear surface 10b. The wall surface 10g is located between the front surface 10a and the rear surface 10b and closer to the rear surface 10b in the X direction. The wall surface 10g is, for example, a plane along the XY plane, and forms a step with respect to the upper surface 10c. The wall surface 10g extends, for example, parallel to the upper surface 10c. The wall surface 10g is disposed at a position offset from a through hole 11A toward the lower surface 10d in the Z direction. That is, the wall surface 10g is provided at a lower position than the through hole 11A with reference to the position of the lower surface 10d in the Z direction.

The position lower than the through hole 11A may be, for example, the position of one end (lower end) of the inner surface constituting the through hole 11A, which is closer to the lower surface 10d in the Z direction. As a result, the wall surface 10g is located at a height between the through hole 11A (specifically, the lower end of the inner surface constituting the through hole 11A) and the lower surface 10d in the Z direction. A wall surface 10h connects the wall surface 10g and the upper surface 10c in the Z direction. The wall surface 10h is, for example, a plane along the YZ plane and is formed perpendicular to the upper surface 10c and the wall surface 10g. The opening 11b of each through hole 11A is formed in the wall surface 10h. Thus, in the optical-fiber holding component 210, each through hole 11A extends from the front surface 10a to the wall surface 10h in the X direction.

As shown in FIG. 21, the through hole 11A does not have a configuration corresponding to the large-diameter portion 13 (refer to FIG. 2), but has only the small-diameter portion 12a and the diameter-increasing portion 12b. When the optical fiber 20 is fixed to the optical-fiber holding component 210, the coating-removed portion 22 of the optical fiber 20 is inserted into the through hole 11A while the coated portion 23 of the optical fiber 20 is disposed along the wall surface 10g. Then, the coating-removed portion 22 is fixed to the through hole 11A and the coated portion 23 is fixed to the wall surface 10g by using, for example, an adhesive. Thus, the wall surface 10g functions as a fixing surface (fixing portion) for fixing the coated portions 23 of the plurality of optical fibers 20.

As shown in FIG. 21, the air discharge hole 16 is formed in a position overlapping the small-diameter portion 12a of the through hole 11A in the Z direction, and is connected to the small-diameter portion 12a in the Z direction. The air discharge hole 16 is disposed at a position offset toward the rear surface 10b from the front surface 10a where the opening 11a of the small-diameter portion 12a is formed. For example, when the adhesive A is injected from the opening 11b, the air inside the small-diameter portion 12a near the front surface 10a is easily discharged to the outside from the opening 11a of the front surface 10a, and thus by disposing the air discharge hole 16 at a position that is further away from the front surface 10a than near the front surface 10a, the air inside the small-diameter portion 12a can be efficiently discharged to the outside by the air discharge hole 16.

In the optical-fiber holding component 210, the coating-removed portion 22 of each optical fiber 20 can be inserted into each through hole 11A while the coated portion 23 of each optical fiber 20 is placed along the wall surface 10g, and thus the insertion work of the coating-removed portion 22 into the through hole 11A is facilitated. Further, since the coated portion 23 of each optical fiber 20 is disposed along the wall surface 10g, the posture of the coating-removed portion 22 with respect to the through hole 11A can be stabilized, and thus the bending stress generated in the coating-removed portion 22 when the coating-removed portion 22 is inserted into the through hole 11A can be reduced. Furthermore, when the through hole 11A is formed from the front surface 10a to the wall surface 10h as in the optical-fiber holding component 210, the through hole 11A can be made shorter than when the through hole is formed from the front surface 10a to the rear surface 10b. When the through hole 11A is shortened, air inside the through hole 11A is likely to escape from the opening 11a or the opening 11b of the through hole 11A to the outside, and thus, the risk of air remaining inside the through hole 11A can be reduced. Thus, the formation of a hollow inside the through hole 11A can be effectively reduced.

### [Fourth Embodiment]

Next, an optical-fiber holding component 310 according to the fourth embodiment will be described. In the following description of the fourth embodiment, the description of the parts overlapping with the first embodiment will be omitted as appropriate, and the parts different from the first embodiment will be mainly described.

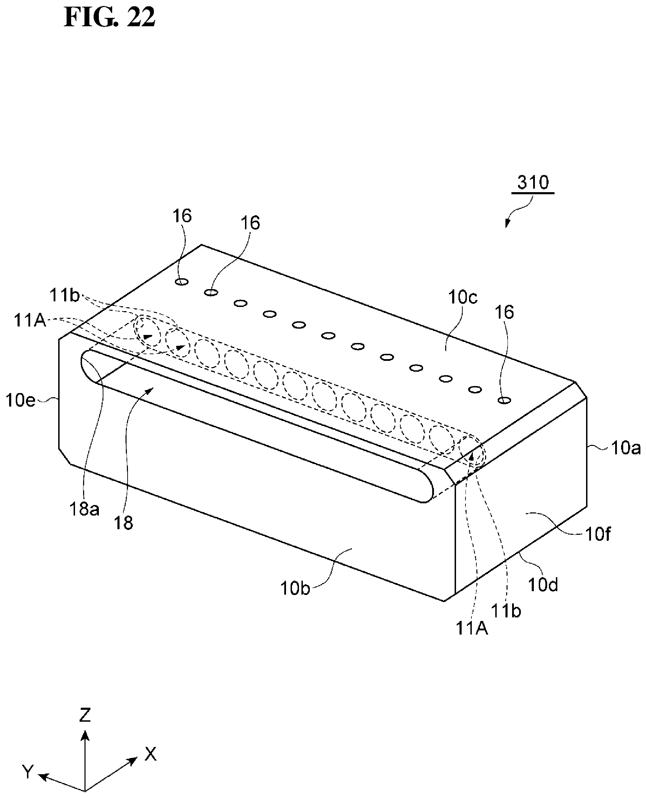

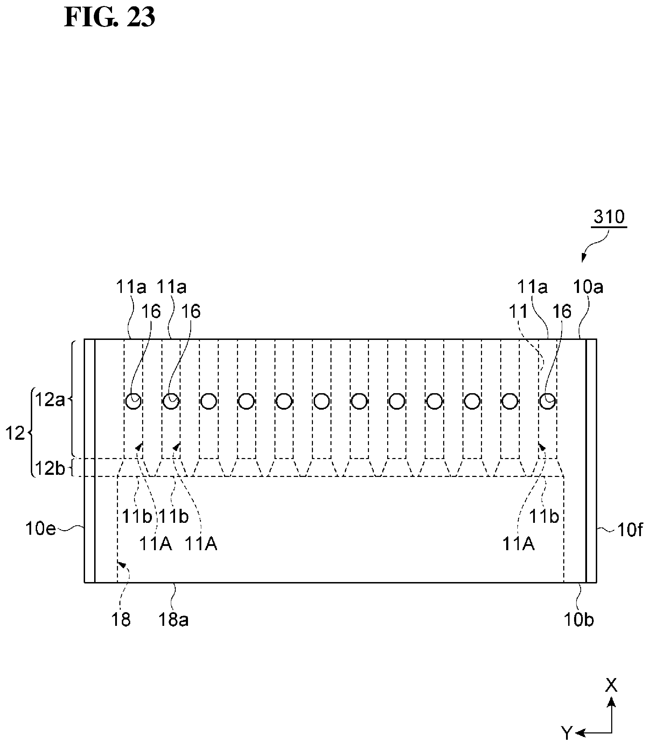

FIG. 22 is a perspective view showing the optical-fiber holding component 310 according to a fourth embodiment. FIG. 23 is a plan view showing the optical-fiber holding component 310. The optical-fiber holding component 310 includes one fixing hole 18 connected to the plurality of through holes 11A. As in the third embodiment, the through hole 11A does not have a configuration corresponding to the large-diameter portion 13, but has only the small-diameter portion 12a and the diameter-increasing portion 12b. The fixing hole 18 extends from the rear surface 10b to the plurality of through holes 11A in the X direction, and is connected through all the through holes 11A in the X direction.

As shown in FIG. 22, the fixing hole 18 forms an opening 18a in the rear surface 10b. The opening 18a has, for example, an oval shape having the Y direction as a longitudinal direction. The opening 18a has a size that covers all the through holes 11A when viewed in the X direction. The coated portions 23 of the plurality of optical fibers 20 are inserted into the fixing holes 18. When the optical fiber 20 is fixed to the optical-fiber holding component 310, the coating-removed portion 22 of the optical fiber 20 is inserted into the small-diameter portion 12a of the through hole 11A while the coated portion 23 of the optical fiber 20 is fitted into the fixing hole 18. Then, the coating-removed portion 22 is fixed to the through hole 11A and the coated portion 23 is fixed to the fixing hole 18 by using, for example, an adhesive.

As shown in FIG. 23, the air discharge hole 16 is formed in a position overlapping the small-diameter portion 12a of the through hole 11A in the Z direction, and is connected to the small-diameter portion 12a in the Z direction. The air discharge hole 16 is disposed at a position offset toward the rear surface 10b from the front surface 10a where the opening 11a of the small-diameter portion 12a is formed. For example, when the adhesive A is injected from the opening 11b, the air inside the small-diameter portion 12a near the front surface 10a is easily discharged to the outside from the opening 11a of the front surface 10a, and thus by disposing the air discharge hole 16 at a position that is further away from the front surface 10a than near the front surface 10a, the air inside the small-diameter portion 12a can be efficiently discharged to the outside by the air discharge hole 16.

In the optical-fiber holding component 310 according to the embodiment, the fixing hole 18 into which the coated portions 23 of the plurality of optical fibers 20 are inserted is provided, and thus the coated portions 23 of the respective optical fibers 20 can be easily inserted into the fixing hole 18. Further, when the through hole 11A is formed from the front surface 10a to the wall surface 10h, the through hole 11A can be made shorter than when the through hole is formed from the front surface 10a to the rear surface 10b. As the through hole 11A becomes shorter, the air inside the through hole 11A is more likely to escape from the opening 11a or the opening 11b of the through hole 11A to the outside, and thus the risk of air remaining inside the through hole 11A can be reduced. Thus, the formation of a hollow inside the through hole 11A can be effectively reduced.

The present disclosure is not limited to the above-described embodiments and modifications, and various modifications can be made. For example, the embodiments and modifications described above may be combined with each other within a compatible range in accordance with the required object and effect. The configuration of the optical-fiber holding component is not limited to the above-described embodiments and modifications. For example, the air discharge hole need not be formed to extend from the upper surface, but may be formed to extend from another outer surface such as the lower surface. The inner diameter of the air discharge hole need not be constant at each position along the air discharge hole, but may vary at each position along the air discharge hole. The shape of the air discharge hole as viewed in the Z direction is not necessarily circular, and may be other shapes such as an elliptical shape, a rectangular shape, and a polygonal shape.

The optical-fiber holding component may include an air discharge hole extending from the upper surface and an air discharge hole extending from the lower surface. For example, when optical fibers arranged in two rows are fixed to an optical-fiber holding component, through holes are also arranged in two rows to correspond to the arrangement of the optical fibers. In this case, the through holes in the first row may be connected to the air discharge holes extending from the upper surface, and the through holes in the second row may be connected to the air discharge holes extending from the lower surface.

As can be understood from the description of the embodiments described above, the present specification includes the disclosure of the following aspects.

### (Appendix 1)

An optical-fiber holding component configured to hold a plurality of optical fibers by being disposed inside a ferrule, the optical-fiber holding component comprising:
an outer surface including a first end surface and a second end surface aligned with each other in a first direction,
wherein the optical-fiber holding component has
   a plurality of through holes extending between the first end surface and the second end surface in the first direction and arranged side by side in a second direction intersecting the first direction, each of the plurality of through holes being capable of receiving a corresponding one of the plurality of optical fibers, and
   at least one air discharge hole extending from the outer surface in such a manner as to intersect the plurality of through holes, the at least one air discharge hole being configured to allow, when an adhesive is injected into the plurality of through holes, air present between an inner surface of each of the plurality of through holes and the adhesive to be discharged from the plurality of through holes to outside.

### REFERENCE SIGNS LIST

1 optical coupling structure
2 optical connector
2A first optical connector
2B second optical connector
10, 10A, 10B, 10C, 10D, 110, 110A, 110B, 210, 310 optical-fiber holding component
10a front surface (first end surface)
10b rear surface (second end surface)
10c upper surface (first side surface)
10d lower surface (second side surface)
10e side surface (third side surface)
10f side surface
10g wall surface (second wall surface)
10h wall surface (first wall surface)
11, 11A through hole
11a, 11b, 16a, 18a, 31, 50a opening
12 holding portion
12a small-diameter portion
12b diameter-increasing portion
13 large-diameter portion
14a core
14b cladding
14c coating
15 injection hole
16, 16A, 16B, 16C, 16D air discharge hole
17 recess
17a bottom surface
18 fixing hole
20 optical fiber
20a distal end surface
22 coating-removed portion
23 coated portion
25 optical-fiber coupling structure body
25A first optical-fiber coupling structure body
25B second optical-fiber coupling structure body
30 ferrule
30a front surface
30b rear surface
32 accommodation hole
32a 32b inner surface
33 fiber holding hole
34 guiding hole
35 window
40 guiding pin
50 spacer
A adhesive
L1, L2 central axis line
S10 outer surface
VL imaginary straight line

## Claims

1. An optical-fiber holding component configured to hold a plurality of optical fibers by being disposed inside a ferrule, the optical-fiber holding component comprising:
an outer surface including a first end surface and a second end surface aligned with each other in a first direction,
wherein the optical-fiber holding component has
a plurality of through holes extending between the first end surface and the second end surface in the first direction and arranged side by side in a second direction intersecting the first direction, and
at least one air discharge hole extending from the outer surface in such a manner as to intersect the plurality of through holes.

2. The optical-fiber holding component according to claim 1,
wherein the outer surface further includes a side surface extending along the first direction and the second direction between the first end surface and the second end surface,
wherein the side surface has an opening of the at least one air discharge hole, and
wherein the at least one air discharge hole extends from the side surface to the plurality of through holes.

3. The optical-fiber holding component according to claim 1 or claim 2,
wherein, in a cross section that is perpendicular to the second direction, the at least one air discharge hole extends in a direction that is inclined with respect to an imaginary straight line, the imaginary straight line being orthogonal to central axes of the plurality of through holes each extending in the first direction.

4. The optical-fiber holding component according to any one of claim 1 to claim 3,
wherein the optical-fiber holding component has a single air discharge hole as the at least one air discharge hole, and
wherein the single air discharge hole is connected to all the plurality of through holes.

5. The optical-fiber holding component according to any one of claim 1 to claim 3,
wherein the optical-fiber holding component has a plurality of air discharge holes as the at least one air discharge hole, the plurality of air discharge holes being arranged side by side in the second direction in such a manner as to correspond to the plurality of through holes, and
wherein each of the plurality of air discharge holes is connected to a corresponding one of the plurality of through holes.

6. The optical-fiber holding component according to claim 5,
wherein an inner diameter of each of the plurality of air discharge holes is smaller than an inner diameter of each of the plurality of through holes.

7. The optical-fiber holding component according to claim 5 or claim 6,
wherein each of the plurality of air discharge holes has an elongated hole shape extending in the first direction between the first end surface and the second end surface.

8. The optical-fiber holding component according to any one of claim 5 to claim 7,
wherein a recess extending in the second direction is formed on the outer surface in such a manner as to intersect all the plurality of air discharge holes, and
wherein each of the plurality of air discharge holes is open to a bottom surface of the recess.

9. The optical-fiber holding component according to any one of claim 1 to claim 8,
wherein each of the plurality of through holes has
a small-diameter portion capable of holding a coating-removed portion, the coating-removed portion being a portion of the plurality of optical fibers from which a coating has been removed,
a large-diameter portion extending in the first direction between the small-diameter portion and the second end surface, capable of holding a coated portion, and having an inner diameter larger than an inner diameter of the small-diameter portion, the coated portion being another portion of the plurality of optical fibers on which the coating remains, and
a diameter-increasing portion configured to connect the small-diameter portion and the large-diameter portion to each other and having an inner diameter that increases from the small-diameter portion toward the large-diameter portion, and
wherein the at least one air discharge hole is connected to the diameter-increasing portion from the outer surface.

10. The optical-fiber holding component according to any one of claim 1 to claim 8,
wherein the optical-fiber holding component further has a plurality of injection holes extending from the outer surface in such a manner as to intersect the plurality of through holes and each connected to a corresponding one of the plurality of through holes, the plurality of injection holes being capable of receiving an adhesive for bonding the plurality of optical fibers to the plurality of through holes,
wherein each of the plurality of through holes has
a small-diameter portion capable of holding a coating-removed portion, the coating-removed portion being a portion of the plurality of optical fibers from which a coating has been removed,
a large-diameter portion extending in the first direction between the holding portion and the second end surface, capable of holding a coated portion, and having an inner diameter larger than an inner diameter of the small-diameter portion, the coated portion being another portion of the plurality of optical fibers on which the coating remains, and
a diameter-increasing portion configured to connect the small-diameter portion and the large-diameter portion to each other in the first direction and having an inner diameter that increases from the small-diameter portion toward the large-diameter portion in the first direction,
wherein the at least one air discharge hole is connected to one of the small-diameter portion, the large-diameter portion, and the diameter-increasing portion, and
wherein each of the plurality of injection holes is connected to a portion that is one of the small-diameter portion, the large-diameter portion, and the diameter-increasing portion and that is not connected to the at least one air discharge hole.

11. The optical-fiber holding component according to claim 10,
wherein the at least one air discharge hole is connected to the diameter-increasing portion, and
wherein each of the plurality of injection holes is connected to the small-diameter portion or the large-diameter portion.

12. The optical-fiber holding component according to claim 10,
wherein the at least one air discharge hole is connected to the small-diameter portion, and
wherein each of the plurality of injection holes is connected to the large-diameter portion.

13. The optical-fiber holding component according to claim 10,
wherein the at least one air discharge hole is connected to the large-diameter portion, and
wherein each of the plurality of injection holes is connected to the small-diameter portion.

14. The optical-fiber holding component according to any one of claim 9 to claim 13,
wherein the small-diameter portion is configured to hold the coating-removed portion such that the coating-removed portion is rotatable about a central axis line of the coating-removed portion.

15. The optical-fiber holding component according to any one of claim 1 to claim 8,
wherein the outer surface further includes
a first wall surface aligned with the first end surface in the first direction between the first end surface and the second end surface, and
a second wall surface extending along the first direction and the second direction in such a manner as to intersect the first wall surface between the first wall surface and the second end surface,
wherein the plurality of through holes extend between the first end surface and the first wall surface in the first direction, and
wherein the second wall surface is formed at a position offset from the plurality of through holes in a third direction that intersects both the first direction and the second direction.

16. An optical-fiber coupling structure body comprising:
the optical-fiber holding component according to any one of claim 1 to claim 15;
the plurality of optical fibers each inserted in a corresponding one of the plurality of through holes; and
an adhesive configured to fix the plurality of optical fibers to the plurality of through holes by being provided inside the plurality of through holes.

17. The optical-fiber coupling structure body according to claim 16,
wherein each of the plurality of optical fibers has at least one core in a region offset from a central axis line.

18. An optical connector comprising:
the optical-fiber coupling structure body according to claim 16 or claim 17; and
the ferrule configured to accommodate at least a portion of the optical-fiber coupling structure body.

19. The optical connector according to claim 18,
wherein the ferrule has
an accommodation hole configured to accommodate the optical-fiber holding component, and
a plurality of fiber holding holes connected to the accommodation hole in the first direction, each of the plurality of fiber holding holes being configured to hold a corresponding one of the plurality of optical fibers extending from the optical-fiber holding component in the first direction,
wherein the outer surface includes
a first side surface, a second side surface, and a third side surface, the first and second side surfaces facing each other with the plurality of through holes interposed between the first and second side surfaces in a third direction that intersects both the first and second directions, and the third side surface being configured to connect the first side surface and the second side surface to each other in the third direction, and
wherein the accommodation hole has a first inner surface and a second inner surface, the first inner surface being in contact with the second side surface, and the second inner surface being in contact with the third side surface.

20. An optical coupling structure comprising:
a first optical connector and a second optical connector as the optical connector according to claim 18 or claim 19,
wherein the first optical connector and the second optical connector face each other with a gap formed between the first and second optical connectors in the first direction.
